# EUROPÄISCHE PATENTANMELDUNG

(11) **EP 4 737 869 A1**
(43) Veröffentlichungstag der Anmeldung: **06.05.2026**
(21) Anmeldenummer: 24209481.1
(22) Anmeldetag: 29.10.2024
(51) Int. Cl.: G01G 13/00, G01G 19/56, G01F 13/00, B25J 15/08

(54) **VORRICHTUNG UND VERFAHREN ZUR DOSIERUNG FEINTEILIGER FESTSTOFFE**

(71) Anmelder: BASF SE, 67056 Ludwigshafen am Rhein (DE)
(72) Erfinder: Niehaus, Rebecca, 67056 Ludwigshaven am Rhein (DE); Wende, Martin, 67056 Ludwigshaven am Rhein (DE); Delgas, Rudi, 67056 Ludwigshaven am Rhein (DE); Frech, Thomas Juergen, 67056 Ludwigshaven am Rhein (DE); Welter, Peter, 67056 Ludwigshaven am Rhein (DE); Geiger, Phil, 67056 Ludwigshaven am Rhein (DE); Vranceanu, Marcel, 67056 Ludwigshaven am Rhein (DE); Hayek, Noah, 68305 Mannheim (DE); Rettig, Niklas Alexander, 67063 Ludwigshafen (DE); Endermann, Moritz Emanuel, 67278 Bockenheim (DE); Pulbere, Sorin, 67056 Ludwigshaven am Rhein (DE)
(74) Vertreter: BASF IP Association

(57) **Zusammenfassung**

Vorrichtung und Verfahren zur Dosierung feinteiliger Feststoffe aus einem Vorratsbehälter (7) in einen Zielbehälter (9) umfassend eine Halterung (8) für den Vorratsbehälter (7), eine Waage (4), einen Roboter (1) mit mindestens einem Roboterarm (2) mit einer Greifhand (3), und eine Steuerung zur Steuerung des Roboterarms (2), wobei die Greifhand (3) des Roboters (1) ausgebildet ist, einen Löffel (5), der einen Stiel und eine an einem Ende des Stiels angeordnete Mulde aufweist, an dem Stiel festzulegen und wieder freizugeben, und die Steuerung eingerichtet ist, die Mulde des Löffels (5) in den Vorratsbehälter (7) zu führen, um feinteiligen Feststoff aus dem Vorratsbehälter (7) in der Mulde aufzunehmen, den mit feinteiligem Feststoff gefüllten Löffel (5) über eine Öffnung des Zielbehälters (9) zu positionieren, und den Löffel (5) in der Greifhand (3) des Roboters (1) in eine Schräglage zu drehen, sodass der feinteilige Feststoff aus der Mulde des Löffels (5) in den Zielbehälter (9) rieselt.

## Beschreibung

Die Erfindung betrifft eine Vorrichtung und ein Verfahren zur Dosierung feinteiliger Feststoffe aus einem Vorratsbehälter in einen Zielbehälter umfassend eine Halterung für den Vorratsbehälter, eine Waage, auf der der Zielbehälter positioniert werden kann, einen Roboter mit mindestens einem Roboterarm mit einer Greifhand, und eine Steuerung zur Steuerung des Roboterarms.

Die Dosierung von feinteiligen Feststoffen, insbesondere Pulvern, ist ein zentrales Element in vielen Bereichen der chemischen Verfahrenstechnik. Die Wirkeigenschaften der Produkte hängen oftmals von physikalischen Eigenschaften wie der Partikelgröße oder der Korngrößenverteilung ab. Um eine gleichbleibende Qualität sicherzustellen, werden die Feststoffe oder Pulver in regelmäßigen Abständen untersucht. Häufig kommen dabei auf das jeweilige Produkt zugeschnittene Analyseverfahren zum Einsatz, die standardisiert durchgeführt werden. Der Begriff der Analytik ist dahingehend zu verstehen, dass sie zum Ziel hat, repräsentative und vergleichbare Aussagen über Eigenschaften von Feststoffproben zu treffen.

Eine Möglichkeit, der steigenden Nachfrage nach Experimenten mit hohem Durchsatz zu begegnen, ist die Automatisierung. Besonders im Bereich der Formulierung ist der Umgang mit einem oder mehreren partikulären Inhaltsstoffen üblich, wie bei der Vorbereitung von Formulierungen für Farben, Lacke oder im Bereich des Pflanzenschutzes. Aufgrund der großen Breite an Eigenschaften, die ein Partikelsystem abdecken kann, stellt die Feststoffdosierung eine herausfordernde Aufgabe dar, insbesondere wenn eine vollautomatische Dosierung ins Auge gefasst wird. Zu den relevanten Eigenschaften zählen unter anderem Fließfähigkeit, Teilchengröße, Tendenz zur Verdichtung, Dichte, Klebrigkeit und elektrostatische Aufladung. Daneben sind zur Durchführung automatisierter Probenahmen Informationen über die zu dosierende Gesamtmenge, die erforderliche Genauigkeit und die erforderliche Reproduzierbarkeit erforderlich.

Eine weitere Anforderdung an einen Dosierprozess ist häufig, dass er wiederholbar und reproduzierbar sein soll. Weiterhin sollen die Einwaagen mit hoher Genauigkeit, Geschwindigkeit und Zuverlässigkeit stattfinden. Es sollen unterschiedliche Einwaagen nacheinander durchführbar sein, sowohl 1 zu 1 Einwaagen, 1 zu n Einwaagen als auch n zu m Einwaagen. Der sogenannte "Dispense-Modus" beschreibt die Fähigkeit eines Feststoffdosiersystems, eine einzelne oder mehrere Quellen bzw. Ziele zu verarbeiten. Man unterscheidet:
- "one-to-one": von einer Quelle zu einem Ziel
- "one-to-many": eine Quelle zu vielen Zielen
- "many-to-one": viele Quellen zu einem Ziel
- "many-to-many": viele Quellen zu vielen Zielen

Um möglichst viele verschiedene Pulver, und damit auch toxische beziehungsweise gefährliche Stoffe, einwiegen zu können, ist eine garantiert kontaminationsfreie Einwaage gefordert. Neben einer Kontaminationsfreiheit in Bezug auf die Umgebung des automatisierten Systems ist auch sicherzustellen, dass eine Verunreinigung einer Probe durch eine andere Probe vermieden wird. Dieses Problem der sogenannten Kreuzkontamination tritt häufig bei der Dosierung von verschiedenen Feststoffen über eine einzige Anlage auf. Um diesem Problem entgegenzuwirken, können unterschiedliche Feststoffe über mehrere einzelne Dosiersysteme verarbeitet werden. Dies führt jedoch zu erheblichen Investitionskosten und kann bei langen Dosierzeiten zum Engpass des gesamten automatisierten Systems werden. Eine vollautomatische Formulierung von Feststoffen ist daher einerseits oft notwendig, andererseits kann sie leicht zur kritischen Einheit für das gesamte Kosten-Nutzen-Verhältnis des Robotersystems werden.

Das Dokument WO 2002/077583 A1 offenbart eine Vorrichtung zum automatischen Umfüllen und Wiegen eines pulverförmigen Materials. Die Vorrichtung umfasst eine Wiegestation mit einer Vorrichtung zum Wiegen des pulverförmigen Materials in einem Behälter. Eine Transfervorrichtung zum Sammeln und Ausgeben des pulverförmigen Materials ist vorgesehen, die einen Hohlkörper mit einem ersten und einem zweiten Ende aufweist. Das erste Ende ist mit einer Vakuumquelle verbunden, so dass in dem Körper ein Vakuum erzeugt wird. Eine hohle Spitze ist abnehmbar mit dem zweiten Ende des Körpers verbunden und weist an einem Ende eine Öffnung auf, so dass bei Betätigung der Vakuumquelle ein Vakuum in der Spitze entsteht. Pulvermaterial wird gesammelt, indem die Öffnung in unmittelbarer Nähe des Pulvermaterials platziert und ein Vakuum angelegt wird. Die eingesaugte Transfermenge an Pulvermaterial wird anschließend in den Behälter überführt. Nachteilig an dieser Methode der Dosierung ist, dass die Verwendung eines Vakuums zur Materialübertragung zu ungleichmäßiger Dosierung führen kann, insbesondere bei Materialien mit unterschiedlichen Fließeigenschaften. Zudem besteht die Gefahr der Verstopfung der hohlen Spitze durch das Pulvermaterial.

Das Dokument WO 2003/098170 A1 beschreibt eine Vorrichtung zur Dosierung von Substanzen mit einer Substanzaufnahmeeinrichtung, die eine Vielzahl von Substanzkompartimenten zur Aufnahme von zu dosierender Substanz umfasst, die einzeln entleerbar sind. Die Vorrichtung umfasst außerdem eine Entleereinrichtung zur Entleerung der Substanzkompartimente, eine Waage zur Bestimmung der Menge an dosierter Substanz und Steuermittel, die die Entleerung der Substanzkompartimente in Abhängigkeit von der mittels der Waage bestimmten Menge an dosierter Substanz steuern. Nachteilig an dieser Methode der Dosierung ist, dass die Verwendung von Substanzkompartimenten zu einer ungleichmäßigen Verteilung der Substanz führen kann, insbesondere wenn die Kompartimente nicht gleichmäßig befüllt sind. Zudem kann die Reinigung der Kompartimente aufwändig sein.

Das Dokument EP 1 482 286 A1 offenbart ein Verfahren zum Transferieren und Dosieren von schüttfähigen, insbesondere pulverförmigen Materialien. In einem zylindrischen Dosierbehältnis ist eine Fördervorrichtung angeordnet, die durch Drehen in eine Richtung pulverförmiges Material in das Dosierbehältnis fördern und durch Drehen in die entgegengesetzte Richtung das Material aus dem Dosierbehältnis fördern kann. Das Dosierbehältnis ist quer zur Förderrichtung der Fördervorrichtung verfahrbar, um das aus einem Behälter aufgenommene Material in einen anderen Behälter dosieren zu können. Nachteilig an diesem Verfahren ist, dass es bei der Förderung von Materialien mit unterschiedlichen Fließeigenschaften zu Verstopfungen kommen kann.

Das Dokument WO 2016/074105 A1 offenbart eine Dosiervorrichtung umfassend eine Waage, an der ein Dosierkopf so angeordnet ist, dass die Waage das Gewicht des Dosierkopfs misst, und ein am Dosierkopf befestigtes Dosierwerkzeug zur Aufnahme und Abgabe von Substanz. Das Dosierwerkzeug ist als ein Glasröhrchen mit einem darin dicht gleitend verstellbar angeordneten Glasstempel ausgebildet. Der Dosierkopf ist mit Greifwerkzeugen sowie einer Hebeeinrichtung versehen, mittels derer der Glasstempel relativ zum Glasröhrchen des Dosierwerkzeugs bewegbar ist. Nachteilig an dieser Methode der Dosierung ist, dass die Verwendung eines Glasröhrchens und Glasstempels zu Bruch oder Beschädigung führen kann, insbesondere bei der Handhabung von harten oder abrasiven Materialien. Zudem kann die Reinigung des Glasröhrchens aufwändig sein.

Das Dokument WO 2017/152293 A1 beschreibt eine Vorrichtung zur Dosierung einer flüssigen oder pulverförmigen Substanz in einen Zielbehälter umfassend ein Greifwerkzeug, mit dem ein Dosierwerkzeug aufgenommen und abgegeben werden kann, sowie eine Waage. Das Dosierwerkzeug ist als Haftkörper, insbesondere in Form eines Glasstäbchens ausgebildet, welcher zum Beispiel durch Eintauchen in eine Substanz mit dieser benetzt wird, so dass eine kleine, von der Waage messbare Substanzmenge am Dosierwerkzeug haften bleibt. Nach Aufnahme der gewünschten Menge an Substanz mit dem Dosierwerkzeug wird letzteres, inklusive der daran anhaftenden Substanz, in den Zielbehälter abgegeben. Nachteilig an dieser Methode der Dosierung ist, dass die Verwendung eines Haftkörpers zu ungenauen Dosierungen führen kann, insbesondere bei Materialien mit unterschiedlichen Haftungseigenschaften. Zudem können die Handhabung und Reinigung des Haftkörpers aufwändig sein.

Der Erfindung lag die Aufgabe zugrunde, eine Vorrichtung zur Dosierung von feinteiligen Feststoffen bereitzustellen, die eine Kontamination der dosierten Feststoffe sicher vermeidet. Eine weitere Aufgabe der Erfindung bestand darin, eine Vorrichtung zu schaffen, die die Dosierung aus einer einzelnen oder mehreren Quellen in ein einzelnes oder mehrere Ziele unter Vermeidung von Kreuzkontaminationen ermöglicht.

Eine weitere Aufgabe der Erfindung bestand darin, eine Vorrichtung zur Dosierung von feinteiligen Feststoffen bereitzustellen, die eine gleichmäßige Dosierung des zu dosierenden Feststoffs und damit verbunden präzise und reproduzierbare Dosierungen ermöglicht.

Eine weitere Aufgabe der Erfindung bestand darin, eine Vorrichtung zur Dosierung von feinteiligen Feststoffen bereitzustellen, die eine robuste Handhabung der zu dosierenden Feststoffe gewährleistet, sodass insbesondere typische Quellen für Anlagenstillstände wie Verstopfungen oder Verschleiß aufgrund abrasiver Materialien vermieden werden.

Diese Aufgaben werden erfindungsgemäß gelöst durch eine Vorrichtung gemäß Anspruch 1 und ein Verfahren gemäß Anspruch 7. Vorteilhafte Ausgestaltungen der Vorrichtung sowie des Verfahrens sind in den abhängigen Ansprüchen angegeben.

Im Folgenden werden die Begriffe "haben", "aufweisen", "umfassen" oder "einschließen" oder beliebige grammatikalische Abweichungen davon in nicht-ausschließlicher Weise verwendet. Dementsprechend können sich diese Begriffe sowohl auf Situationen beziehen, in welchen, neben dem durch diese Begriffe eingeführten Merkmal, keine weiteren Merkmale vorhanden sind, oder auf Situationen, in welchen ein oder mehrere weitere Merkmale vorhanden sind. Beispielsweise kann sich der Ausdruck "A hat B", "A weist B auf", "A umfasst B" oder "A schließt B ein" sowohl auf die Situation beziehen, in welcher, abgesehen von B, kein weiteres Element in A vorhanden ist (d.h. auf eine Situation, in welcher A ausschließlich aus B besteht), als auch auf die Situation, in welcher, zusätzlich zu B, ein oder mehrere weitere Elemente in A vorhanden sind, beispielsweise Element C, Elemente C und D oder weitere Elemente.

Weiterhin wird darauf hingewiesen, dass die Begriffe "mindestens ein" und "ein oder mehrere" sowie grammatikalische Abwandlungen dieser Begriffe oder ähnliche Begriffe, wenn diese in Zusammenhang mit einem oder mehreren Elementen oder Merkmalen verwendet werden und ausdrücken sollen, dass das Element oder Merkmal einfach oder mehrfach vorgesehen sein kann, in der Regel lediglich einmalig verwendet werden, beispielsweise bei der erstmaligen Einführung des Merkmals oder Elementes. Bei einer nachfolgenden erneuten Erwähnung des Merkmals oder Elementes wird der entsprechende Begriff "mindestens ein" oder "ein oder mehrere" in der Regel nicht mehr verwendet, ohne Einschränkung der Möglichkeit, dass das Merkmal oder Element einfach oder mehrfach vorgesehen sein kann.

Weiterhin werden im Folgenden die Begriffe "vorzugsweise", "insbesondere", "beispielsweise" oder ähnliche Begriffe in Verbindung mit optionalen Merkmalen verwendet, ohne dass alternative Ausführungsformen hierdurch beschränkt werden. So sind Merkmale, welche durch diese Begriffe eingeleitet werden, optionale Merkmale, und es ist nicht beabsichtigt, durch diese Merkmale den Schutzumfang der Ansprüche und insbesondere der unabhängigen Ansprüche einzuschränken. So kann die Erfindung, wie der Fachmann erkennen wird, auch unter Verwendung anderer Ausgestaltungen durchgeführt werden. In ähnlicher Weise werden Merkmale, welche durch "in einer Ausführungsform der Erfindung" oder durch "in einem Ausführungsbeispiel der Erfindung" eingeleitet werden, als optionale Merkmale verstanden, ohne dass hierdurch alternative Ausgestaltungen oder der Schutzumfang der unabhängigen Ansprüche eingeschränkt werden soll. Weiterhin sollen durch diese einleitenden Ausdrücke sämtliche Möglichkeiten, die hierdurch eingeleiteten Merkmale mit anderen Merkmalen zu kombinieren, seien es optionale oder nicht-optionale Merkmale, unangetastet bleiben.

Maßangaben werden im Folgenden mit ihren üblichen Abkürzungen bezeichnet. So werden insbesondere die Einheiten Millimeter mit "mm", Mikrometer mit "µm", Milligramm mit "mg", Kubikzentimeter mit "cm³", Grad mit "°" und Prozent mit "%" abgekürzt angegeben.

Ein Aspekt der Erfindung betrifft eine Vorrichtung zur Dosierung feinteiliger Feststoffe aus einem Vorratsbehälter in einen Zielbehälter, umfassend eine Halterung für den Vorratsbehälter, eine Waage, auf der der Zielbehälter positioniert werden kann, einen Roboter mit mindestens einem Roboterarm mit einer Greifhand und eine Steuerung zur Steuerung des Roboterarms. Die Greifhand des Roboters ist ausgebildet, einen Löffel, der einen Stiel und eine an einem Ende des Stiels angeordnete Mulde aufweist, an dem Stiel festzulegen und wieder freizugeben. Die Steuerung ist eingerichtet, die Mulde des Löffels in den Vorratsbehälter zu führen, um feinteiligen Feststoff aus dem Vorratsbehälter in der Mulde aufzunehmen, den mit feinteiligem Feststoff gefüllten Löffel über eine Öffnung des Zielbehälters zu positionieren und den Löffel in der Greifhand des Roboters in eine Schräglage zu drehen, sodass der feinteilige Feststoff aus der Mulde des Löffels in den Zielbehälter rieselt.

Ein weiterer Aspekt der Erfindung betrifft einen zur Verwendung in der erfindungsgemäßen Vorrichtung angepassten Löffel. Der Löffel weist vorzugsweise eine Mulde und einen Stiel mit einem Griffabschnitt und einem Übergangsabschnitt auf, wobei der Übergangsabschnitt auf einer Seite mit dem Griffabschnitt und auf der gegenüberliegenden Seite mit der Mulde verbunden ist. Bevorzugt weist der Griffabschnitt in einem zwischen seinen beiden Enden befindlichen Abschnitt mindestens eine Einkerbung und/oder mindestens eine Ausbuchtung aufweist.

Ein weiterer Aspekt der Erfindung betrifft ein Verfahren zur Dosierung feinteiliger Feststoffe aus einem Vorratsbehälter in einen Zielbehälter in einer Vorrichtung, die eine Halterung für den Vorratsbehälter, eine Waage, auf der der Zielbehälter positioniert werden kann, einen Roboter mit mindestens einem Roboterarm mit einer Greifhand und eine Steuerung zur Steuerung des Roboterarms umfasst, wobei die Steuerung den Roboter veranlasst, die folgenden Schritte durchzuführen:
a) Festlegen eines Löffels, der einen Stiel und eine an einem Ende des Stiels angeordnete Mulde aufweist, an seinem Stiel durch die Greifhand des Roboters,
b) Einführen der Mulde des Löffels in den Vorratsbehälter,
c) Aufnahme von feinteiligem Feststoff aus dem Vorratsbehälter in die Mulde des Löffels,
d) Positionierung des mit feinteiligem Feststoff gefüllten Löffel über eine Öffnung des auf der Waage positionierten Zielbehälters,
e) Drehen des Löffels in der Greifhand des Roboters in eine Schräglage, sodass der feinteilige Feststoff aus der Mulde des Löffels in den Zielbehälter rieselt,
f) Ermittlung des Gewichts des zumindest teilweise befüllten Zielbehälters auf der Waage.

Weitere Aspekte der Erfindung sind ein Computerprogramm sowie ein Computerprogrammprodukt, die geeignet sind, ein erfindungsgemäßes Verfahren durchzuführen.

Das erfindungsgemäße Computerprogramm enthält Programmcode, der bei Ausführung des Computerprogramms auf einer geeigneten Computeranlage ein erfindungsgemäßes Verfahren durchführt. Insbesondere enthält das Computerprogramm Programmcode, der, wenn er von einer Steuereinheit einer erfindungsgemäßen Vorrichtung ausgeführt wird, die Vorrichtung veranlasst, das erfindungsgemäße Verfahren durchzuführen.

Das erfindungsgemäße Computerprogrammprodukt umfasst ein computerlesbares Medium und ein auf dem computerlesbaren Medium gespeichertes Computerprogramm mit Programmcodemitteln, die bei Ablauf des Computerprogramms auf einer geeigneten Computeranlage das erfindungsgemäße Verfahren durchführen. Insbesondere ist das Computerprogrammprodukt ein Computerprogrammprodukt zum Erzeugen von Steuerdaten zum Steuern wenigstens eines Teils einer Vorrichtung zur Dosierung feinteiliger Feststoffe, wobei das Computerprogrammprodukt ein computerlesbares Medium und ein auf dem computerlesbaren Medium gespeichertes Computerprogramm mit Programmcodemitteln umfasst, die bei Ablauf des Computerprogramms auf der Steuerung einer erfindungsgemäßen Vorrichtung die Vorrichtung dazu veranlassen, das erfindungsgemäße Verfahren durchzuführen.

Unter dem Begriff "feinteilige Feststoffe" werden Feststoffe verstanden, die als Pulver oder rieselfähige Schüttgüter vorliegen. Die Partikelgröße der feinteiligen Feststoffe beträgt vorzugsweise von 1 µm bis 1000 µm.

Bei den zu handhabenden Behältern, sowohl den Vorratsbehältern als auch den Zielbehältern, kann es sich um standardisierte Gefäße handeln, wie sie beispielsweise in chemischen Laboren verwendet werden. Sie sind typischerweise aus Materialien gefertigt, die eine hohe chemische Beständigkeit und eine einfache Reinigung ermöglichen. Die Behälter können eine zylindrische Form mit einem Schraubverschluss haben, der ein sicheres Verschließen und Öffnen ermöglicht. Ein Verschluss kann je nach Anwendungsfall erforderlich sein, um zum Beispiel die Kontaminationsfreiheit während des gesamten Prozesses zu gewährleisten oder Geruchsbelästigungen zu vermeiden. Die Gefäße können transparent sein, was eine einfache visuelle Kontrolle des Inhalts ermöglicht. Hinsichtlich ihrer äußeren Form können die Behälter beispielsweise zylindrisch sein, vorzugsweise mit einem runden Querschnitt.

Der Vorratsbehälter wird in einer Halterung gehalten. Die für den Vorratsbehälter vorgesehene Halterung dient dem Zweck, den Vorratsbehälter während des Dosiervorgangs zu halten. Die Halterung kann auch den weiteren Zweck erfüllen, einen oder mehrere Vorratsbehälter im Sinne einer Bevorratung zu lagern. In einer Halterung zur Bevorratung können auch Zielbehälter gelagert werden, beispielsweise vor oder nach einem Dosiervorgang. Die Halterung kann mehrteilig sein, beispielsweise eine erste Halterung zur Festlegung des Vorratsbehälters, aus dem während des Dosiervorgangs Feststoff dosiert wird, und eine zweite Halterung, die der Bevorratung weiterer Vorratsbehälter dient. Eine Halterung zur Bevorratung kann auch gleichzeitig die Funktion der Halterung während des Dosiervorgangs erfüllen.

Vorzugsweise ist die Halterung derart gestaltet, dass sie eine sichere Aufnahme der Behälter gewährleistet und insbesondere ein Verrutschen der Behälter in der Halterung während des Dosiervorgangs verhindert.

In einer Ausführungsform weist die Halterung für den Vorratsbehälter mehrere Aufnahmeplätze zur Aufnahme von Vorratsbehältern auf. Vorzugsweise weist die Halterung mehrere Aufnahmeplätze auf, die in Größe und/oder Form unterschiedlich sind. Dies hat den Vorteil, dass die Halterung Vorratsbehälter unterschiedlicher Größe und Form aufnehmen kann.

In einer Variante dieser Ausführungsform weist die Halterung mehrere Aufnahmeplätze zur Aufnahme von Vorratsbehältern auf, die denselben Abstand zueinander aufweisen. Ein Vorteil dieser Variante ist, dass der gleichbleibende Abstand zwischen den Aufnahmeplätzen eine präzise und wiederholbare Ansteuerung der Gefäße durch den Roboter ermöglicht, insbesondere dann, wenn der Roboter die einzelnen Aufnahmeplätze nur aufgrund seiner Programmierung ansteuert und zum Beispiel nicht über optische Erkennungseinrichtungen wie Kameras verfügt.

In einer Ausführungsform umfassen die Halterungen eine Gefäßwanne und Gefäßeinsätze, die in die Gefäßwanne eingesetzt werden können. Vorzugsweise sind die Gefäßeinsätze derart gestaltet, dass durch ihre äußere Form ein sicherer Halt in der Gefäßwanne sichergestellt ist, und ihre innere Form für die Aufnahme unterschiedlicher Vorratsbehälter gestaltet ist. Dies kann beispielsweise dadurch realisiert sein, dass mehrere Gefäßeinsätze vorgehalten werden, die im Inneren eine Aussparung aufweisen, die für unterschiedliche Gefäßeinsätze unterschiedliche Formen oder Innendurchmesser aufweisen kann. Die Gefäßeinsätze können beispielsweise eine äußere Form aufweisen, die einem abgerundeten Quader entspricht. Die Aussparung im Inneren kann beispielsweise eine zylindrische Vertiefung sein, deren Maße an die aufzunehmenden Behälter angepasst sind. Auf diese Weise lässt sich einfach und effizient ein modularer Aufbau der Halterung realisieren, der leicht an die jeweiligen Anforderungen der Dosieraufgabe angepasst werden kann. Die Bestandteile einer solchen modularen Halterung können beispielsweise durch additive Fertigung (3D-Druck) in einfacher Weise hergestellt werden, zum Beispiel auf Basis von Kunststoffen oder Metallen.

In einer Ausführungsform sind die zur Aufnahme von Vorratsbehältern vorgesehenen Teile der Halterung für den Vorratsbehälter verstellbar. Vorzugsweise weist die Halterung mehrere Aufnahmeplätze auf, die in Größe und/oder Form unterschiedlich und verstellbar sind. Dies hat den Vorteil, dass die Halterung Vorratsbehälter unterschiedlicher Größe und Form aufnehmen kann.

In einer Ausführungsform ist die Halterung mit einer Schnellspannvorrichtung ausgestattet. Dies hat den Vorteil, dass Vorratsbehälter schnell und sicher zu fixieren und zu lösen sind. Unter dem Begriff "Schnellspannvorrichtungen" werden hier und im Folgenden Einrichtungen mit Mechanismen verstanden, die es ermöglichen, Vorratsbehälter schnell und sicher zu fixieren und zu lösen. Schnellspannvorrichtungen können beispielsweise als mechanische Klemmen, pneumatische Spannvorrichtungen oder magnetische Halterungen ausgestaltet sein. Abhängig von den spezifischen Anforderungen der Anwendung kann eine geeignete Schnellspannvorrichtung gewählt werden, die im Hinblick auf Faktoren wie der Art des zu fixierenden Behälters, den Umgebungsbedingungen oder den Anforderungen an die Geschwindigkeit und Sicherheit des Prozesses angepasst ist.

In einer Ausführungsform ist die Halterung mit einer Vibrationsfunktion ausgestattet. Dies hat den Vorteil, dass der Feststoff im Vorratsbehälter gleichmäßig verteilt werden kann und möglichen Verklumpungen vorgebeugt wird. Dies wirkt sich auch positiv auf die Qualität der Dosierung feinteiliger Feststoffe aus, da eine gleichmäßige Verteilung eine präzise Dosierung ermöglicht. Eine Vibrationsfunktion kann beispielsweise durch die Vibrationsmotoren, piezoelektrische Elemente oder Ultraschallvibrationen realisiert sein. Vibrationsmotoren können beispielsweise in der Halterung integriert sein. Sie erzeugen mechanische Schwingungen, die den Feststoff im Behälter in Bewegung setzen. In ähnlicher Weise können piezoelektrische Elemente in der Halterung integriert sein. Sie erzeugen Vibrationen durch elektrische Spannung und sind besonders effektiv bei hohen Frequenzen. Ultraschallvibrationen nutzen hochfrequente Schallwellen, die beispielsweise den Feststoff im Zielbehälter in Bewegung versetzen und Verklumpungen lösen. Abhängig von den spezifischen Eigenschaften des Feststoffs, den Anforderungen an die Dosiergenauigkeit und den Umgebungsbedingungen kann eine geeignete Einrichtung zur Realisierung einer Vibrationsfunktion ausgewählt werden.

In einer Ausführungsform ist die Halterung um mindestens eine Achse drehbar gelagert. Vorzugsweise weist die Halterung mehrere Aufnahmeplätze auf, die einzeln und/oder in Gruppen drehbar gelagert sind. Dies hat den Vorteil, dass der Vorratsbehälter in unterschiedlichen Ausrichtungen positioniert werden kann und der Zugang für den Roboterarm zu den in der Halterung gelagerten Vorratsbehältern erleichtert wird.

In einer Ausführung, bei der der Roboter über einen zweiten Roboterarm verfügt, kann die Funktion des Haltens des Vorratsbehälters während des Dosiervorgangs auch von dem zweiten Roboterarm übernommen werden. In diesem Fall kann die erfindungsgemäß vorgesehene Halterung der zweite Roboterarm sein, der vorzugsweise mit einer Greifhand zum Halten des Vorratsbehälters ausgestattet ist. Optional kann die Vorrichtung gemäß dieser Ausführungsform weitere Halterungen wie oben beschrieben enthalten, beispielsweise zur Bevorratung von Vorratsbehältern.

Die Vorrichtung zur Dosierung umfasst weiterhin eine Waage, auf der ein Zielbehälter, in den der Feststoff dosiert werden soll, positioniert werden kann. Bei der Waage kann es sich um eine handelsübliche Laborwaage handeln, die für den Einsatz in der jeweiligen Umgebung ausgelegt ist. Vorzugsweise handelt es sich bei der Waage um eine Präzisionswaage, die präzise Messungen des eingefüllten Feststoffs im geforderten Messbereich ermöglicht.

In einer Ausführungsform ist die Waage mit einer informationstechnischen Schnittstelle ausgestattet. Dies ermöglicht die informationstechnische Verbindung der Waage mit der Steuerung der Vorrichtung und/oder mit anderen informationstechnischen Komponenten wie Datenbanken, Laborinformationssystemen, Prozessdateninformationssystemen oder Komponenten von übergreifenden Automatisierungssystemen.

In einer Ausführungsform weist die Waage eine Nivelliereinrichtung auf. Vorzugsweise ermöglicht die Nivelliereinrichtung eine automatische Nivellierung. Dies hat den Vorteil, dass der Zielbehälter zuverlässig waagerecht ausgerichtet werden kann.

In einer Ausführungsform weist die Waage einen Überlastschutz auf. Dies verhindert Beschädigungen durch ein zu hohes Gewicht des auf der Waage platzierten Zielbehälters bzw. seiner Befüllung.

In einer Ausführungsform umfasst das Verfahren zur Dosierung feinteiliger Feststoffe einen weiteren Schritt zur automatischen Kalibrierung der Waage. Vorzugsweise wird der Kalibrierschritt vor Beginn oder mit Beginn eines Dosierprozesses durchgeführt. Dies gewährleistet zuverlässige und genaue Messergebnisse.

Die Vorrichtung umfasst einen Roboter mit mindestens einem Roboterarm mit einer Greifhand, die ausgebildet ist, einen Löffel an seinem Stiel festzulegen und wieder freizugeben. Der Roboter kann ein kommerziell verfügbarer Industrieroboter mit mehreren Achsen sein, der für die erforderlichen Nutzlasten und Reichweiten ausgelegt ist.

Der Grundkörper des Roboters, an dem der Roboterarm beweglich gelagert ist, kann in Bezug auf die weiteren Komponenten der Vorrichtung wie Waage oder Halterungen mobil oder ortsfest sein. Vorzugsweise ist er ortsfest angeordnet.

In einer Ausführungsform ist an dem Grundkörper des Roboters ein Roboterarm beweglich gelagert, an dessen anderem Ende eine Greifhand angeordnet ist.

In einer Ausführungsform weist der Roboter einen zweiten Roboterarm auf. Ein zweiter Roboterarm hat den Vorteil einer größeren Flexibilität und Zeitersparnis, wodurch die Gesamtdauer des Dosierungsprozesses verkürzt wird. In einer Ausgestaltung ist der zweite Roboterarm räumlich von dem ersten Roboterarm getrennt. Die beiden Roboterarme können an unterschiedlichen Grundkörpern angebracht sein, sodass die Vorrichtung in dieser Ausgestaltung zwei Teilsysteme umfasst: einen ersten Roboter mit einem ersten Roboterarm und einer ersten Greifhand, sowie einen zweiten Roboter mit einem zweiten Roboterarm und einer zweiten Greifhand. In einer anderen Ausgestaltung sind beide Roboterarme an demselben Grundkörper angebracht. Eine derartige Ausgestaltung ist auch unter dem Begriff "Zweiarmroboter" bekannt.

In einer Ausführungsform ist der mindestens eine Roboterarm mit einer flexiblen Gelenkstruktur ausgestattet. Vorzugsweise ist der Roboterarm in mindestens drei Raumrichtungen bewegbar. Dies hat den Vorteil, dass die Gelenkstruktur eine präzise Bewegung des Roboterarms in alle Richtungen ermöglicht.

In einer Ausführungsform weist der mindestens eine Roboterarm Sensoren zur Erkennung von Hindernissen auf. Vorzugsweise sind dies Ultraschallsensoren oder optische Sensoren, beispielsweise Kameras. Dies hat den Vorteil, dass Kollisionen, beispielsweise mit einem Aufbewahrungsregal für Löffel oder einer Halterung für Vorratsbehälter, vermieden werden können und eine kompaktere Bauform der Vorrichtung möglich ist.

Die Greifhand des Roboters kann unterschiedliche Formen und Greifmechanismen aufweisen, die auf die jeweilige Aufgabe der Greifhand angepasst sind. Beispielsweise kann die Aufnahme und Festlegung des Stiels des Löffels andere Anforderungen an die Gestaltung der Greifhand stellen als das Greifen und Transportieren eines Vorratsbehälters oder Zielbehälters. Die Vorrichtung kann auch mehrere unterschiedliche Greifhände umfassen, die je nach Aufgabe und Bedarf von dem Roboter an den Roboterarm montiert werden.

Im Fall eines Roboters mit nur einem Arm kann die Greifhand als Universalgreifhand ausgebildet sein, die sowohl den Stiel des Löffels als auch Behälter greifen und durch den Arbeitsraum des Roboterarms bewegen kann. Eine solche Universalgreifhand kann beispielsweise zwei Greifbacken aufweisen, die aufeinander zu und voneinander weg verschiebbar sind, sodass der Stiel des Löffels oder ein Behälter zwischen den Greifbacken eingeklemmt werden kann. Es können aber auch zwei unterschiedliche Greifhände vorgesehen sein, die an die spezifischen Erfordernisse angepasst sind und von dem Roboterarm im Wechsel eingesetzt werden, abhängig davon, ob der Löffel oder ein Behälter zu greifen oder zu transportieren sind.

Im Fall eines Roboters mit zwei Armen ist es vorteilhaft, wenn ein Arm für die Handhabung des Löffels und der andere Arm für die Handhabung der Behälter eingerichtet ist. Vorzugsweise sind die Greifhand des ersten Roboterarms und die Greifhand des zweiten Roboterarms unterschiedlich gestaltet und auf die jeweiligen Erfordernisse ihrer Aufgabe angepasst.

In einer Ausführungsform umfasst die Greifhand zwei Greifbacken, die in Richtung zueinander und voneinander weg bewegbar sind. Mindestens eine der beiden Greifbacken weist einen ersten zum Roboterarm orientierten Abschnitt und einen zweiten vom Roboterarm weg weisenden Ende der Greifhand orientierten Abschnitt auf, wobei der erste Abschnitt und der zweite Abschnitt in einem Winkel zueinander angeordnet sind, der größer als 90° und kleiner als 180° ist, sodass der zweite Abschnitt nach innen in Richtung der anderen Greifbacke verläuft. Vorzugsweise sind die beiden Abschnitte als Platten geformt, die fest miteinander verbunden sind. In einer Variante sind beide Greifbacken wie oben beschrieben gestaltet, wobei die Abschnitte und Winkel zwischen den Abschnitten bei beiden Greifbacken identisch oder unterschiedlich sein können. Vorzugsweise sind beide Greifbacken identisch ausgebildet. Die Gestaltung der Greifbacken mit zwei zueinander in einem Winkel angeordneten Abschnitten eignet sich insbesondere für das Greifen und Transportieren von Behältern, da der nach innen geneigte zweite Abschnitt oder die nach innen geneigten zweiten Abschnitte ein sicheres Halten des Behälters begünstigen und insbesondere ein unbeabsichtigtes Herausrutschen aus der Greifhand verhindern.

In einer Ausführungsform umfasst die Greifhand zwei Greifbacken, die in Richtung zueinander und voneinander weg bewegbar sind. Mindestens eine der beiden Greifbacken weist in der zu der anderen Greifbacke weisenden Innenfläche eine Wölbung nach außen auf. Der Abstand zwischen der Innenfläche zur gegenüberliegenden Greifbacke ist also an den Rändern der Wölbung kleiner als in der Mitte der Wölbung. Vorzugsweise ist die Form und Dimension der Wölbung den aufzunehmenden Gegenständen, insbesondere Vorratsbehälter und/oder Zielbehälter, nachempfunden. In einer Variante sind beide Greifbacken wie oben beschrieben gestaltet, wobei die Wölbung auf der Innenfläche bei beiden Greifbacken identisch oder unterschiedlich sein kann. Vorzugsweise sind beide Greifbacken identisch ausgebildet. Diese Ausführungsform eignet sich insbesondere für das Greifen und Transportieren von Behältern, da die Wölbung ein sicheres Halten des Behälters begünstigt und insbesondere ein unbeabsichtigtes Herausrutschen aus der Greifhand verhindert.

In einer Ausführungsform umfasst die Greifhand mindestens eine Greifbacke, die auf ihrer Innenseite eine Kontur aufweist, die mit einer Außenkontur des Griffabschnitts eines Löffels korrespondiert. Unter der Innenseite wird die Seite verstanden, an der der Löffel festgelegt wird, beispielsweise indem er zwischen der konturierten Greifbacke und einer weiteren Greifbacke oder einem fest mit der Greifhand verbundenen Anschlag eingespannt wird. Die Kontur kann beispielsweise oval, flach, dreieckig, viereckig, fünfeckig, sechseckig, siebeneckig, achteckig oder mehreckig sein oder jede andere Form aufweisen, die insbesondere ein Verschieben oder Verdrehen des in der Greifhand aufgenommenen Löffels verhindert oder zumindest erschwert. In einer Variante umfasst die Greifhand eine weitere Greifbacke, die ebenfalls wie oben beschrieben konturiert gestaltet ist. Die Kontur der zweiten Greifbacke kann identisch oder unterschiedlich zur Kontur der ersten Greifbacke sein. Die Kontur der einen Greifbacke oder der beiden Greifbacken kann auch einen Sicherungsmechanismus wie nachfolgend beschrieben umfassen oder aufgrund der Formgebung der Kontur realisieren.

In einer Ausführungsform weist die Greifhand des Roboters einen Sicherungsmechanismus zur Festlegung des Löffels auf. Dies hat den Vorteil, dass der Sicherungsmechanismus den Löffel sicher greift und ein unbeabsichtigtes Drehen oder Durchrutschen des Löffels in der Greifhand verhindert. Eine Sicherung des Löffels in der Greifhand verbessert die Genauigkeit und Zuverlässigkeit des Dosierungsprozesses. Ein Sicherungsmechanismus kann beispielsweise durch mechanische Verriegelungen, magnetische Halterungen oder angepasste Greifmechanismen realisiert werden.

In einer Variante umfasst der Sicherungsmechanismus Formelemente auf der Innenseite der Greifhand, die eingerichtet sind, in korrespondierende Formelemente am Stiel des Löffels einzugreifen und den Stiel durch Formschluss und/oder Kraftschluss festzulegen. Ein Beispiel für geeignete Formelemente sind Einkerbungen und/oder Ausbuchtungen auf der Innenseite der Greifhand. In einer Ausgestaltung weist die Greifhand mindestens eine Einkerbung auf, die mit mindestens einer Ausbuchtung auf dem Stiel eines Löffels korrespondiert. In einer weiteren Ausgestaltung weist die Greifhand mindestens eine Ausbuchtung auf, die mit mindestens einer Einkerbung auf dem Stiel eines Löffels korrespondiert. In einer weiteren Ausgestaltung weist die Greifhand mindestens eine Einkerbung und mindestens eine Ausbuchtung auf, die mit mindestens einer Ausbuchtung und mindestens einer Einkerbung auf dem Stiel eines Löffels korrespondieren.

In einer Variante umfasst der Sicherungsmechanismus eine rutschhemmende Oberfläche zumindest von Teilen der Innenseite der Greifhand, die den Stiel des Löffels im festgelegten Zustand berühren. In einer Ausgestaltung umfasst die rutschhemmende Oberfläche eine Gummierung, die beispielsweise als Gummischicht auf Teile der Innenseite der Greifhand oder auf die gesamte Innenseite der Greifhand aufgebracht sein kann.

In einer Ausführungsform ist die Greifhand des Roboters eingerichtet, Löffel mit unterschiedlichen Stielen aufzunehmen. Vorzugsweise kann der Querschnitt des Löffelstiels rund, oval, flach, dreieckig, viereckig, fünfeckig, sechseckig oder mehreckig sein. Dies hat den Vorteil einer universellen Einsetzbarkeit, sodass vielfältige Löffel verwendet werden können.

In einer Ausführungsform weist die Greifhand des Roboters eine Heizeinrichtung auf. Dies hat den Vorteil, dass die Beheizung es ermöglicht, den Löffel bei Bedarf zu erwärmen und das Anhaften von Feststoffen zu verhindern. Eine Heizeinrichtung kann beispielsweise elektrische Heizdrähte, Heizpatronen oder Infrarotheizungen umfassen.

In einer Ausführungsform weist die Greifhand des Roboters eine Schnellwechselvorrichtung auf. Dies hat den Vorteil, dass Löffel schnell ausgetauscht werden können, was die Flexibilität und Effizienz des Dosierungsprozesses erhöht, und die Gesamtdauer des Dosierungsprozesses verkürzt. Wartungs- und Reinigungszeiten können verkürzt werden, da Löffel schnell und einfach ausgetauscht werden können. Eine Schnellwechselvorrichtung kann beispielsweise modulare Greifmechanismen, Schnellverschlüsse oder magnetische Halterungen umfassen.

In einer Ausführungsform weist die Greifhand des Roboters eine Einrichtung zur Ermittlung des Füllstands an Feststoff in dem Vorratsbehälter auf. Geeignete Einrichtungen sind beispielsweise optische Sensoren oder Ultraschallsensoren. Die Ermittlung des Füllstands kann beispielsweise dadurch erfolgen, dass ein Sensor durch die Öffnung des Vorratsbehälters hindurch ein Signal ermittelt, das repräsentativ für die Oberfläche des Feststoffs im Behälter ist, und aus dem Signal eine Distanz zwischen der Oberfläche des Feststoffs und der Öffnung des Behälters oder einem anderen Referenzpunkt bestimmt. Insbesondere im Fall eines durchsichtigen Vorratsbehälters kann die Ermittlung des Füllstands an Feststoff in dem Behälter auch dadurch erfolgen, dass ein Sensor seitlich durch die Wand des Vorratsbehälters hindurch ein Signal ermittelt, das repräsentativ für den Übergang von dem mit Feststoff gefüllten Abschnitt zu dem nicht mit Feststoff gefüllten Abschnitt ist.

In einer Ausführungsform weist die Greifhand des Roboters eine Einrichtung zum Schütteln des in der Greifhand festgelegten Löffels auf. In einer Variante umfasst die Einrichtung zum Schütteln einen oder mehrere Vibrationsmotoren in mindestens einer Greifbacke der Greifhand. Die Vibration der Greifbacke überträgt sich auf den in der Greifbacke festgelegte Stiel des Löffels und auf die Mulde, die dadurch hin und her bewegt wird. Diese Ausgestaltung kann vorteilhaft dazu eingesetzt werden, den Löffel nach Befüllung der Mulde im Vorratsbehälter zu schütteln, um die Oberfläche des in der Mulde befindlichen Feststoffs zu nivellieren, oder um den Löffel beim Entleeren der Mulde über der Öffnung des Zielbehälters zu schütteln, sodass zu dosierender Feststoff aus der Mulde in den Zielbehälter rieselt.

Die Vorrichtung umfasst weiterhin eine Steuerung zur Steuerung des Roboterarms. Entsprechende Steuerungseinrichtungen sind üblicherweise auf den jeweiligen Roboter abgestimmt und können kommerziell erworben werden. Die Konfiguration und Programmierung der Steuerungseinrichtung erfolgt in den entsprechenden Systemumgebungen und Programmiersprachen. Methoden der Umsetzung sind dem Fachmann bekannt.

Die Steuerung kann in der Informationstechnologie bekannte Schnittstellen aufweisen, um Daten mit anderen Komponenten auszutauschen. In einer Variante umfasst die Steuerung mindestens eine Schnittstelle, über die sie Daten mit der Waage austauschen kann.

In einer Variante ist die Steuerung mit einer lernfähigen Software ausgestattet, die sich an unterschiedliche Dosieranforderungen anpassen kann. In einer weiteren Variante ist die Steuerung mit einer Fernsteuerungsfunktion ausgestattet, die eine Überwachung und Steuerung aus der Ferne ermöglicht. In einer weiteren Variante

Erfindungsgemäß wird ein Löffel verwendet, um den zu dosierenden Feststoff aus dem Vorratsbehälter in den Zielbehälter zu transportieren. Die Gestaltung des Löffels ist vorzugsweise derart, dass er einerseits die Transportaufgabe optimal erfüllt, andererseits die Gefahr einer Kontamination des Zielbehälters oder der Umgebung der Vorrichtung durch aus dem Vorratsbehälter entnommenen Feststoff minimiert wird.

In einer Ausführungsform weist der Löffel eine Mulde und einen Stiel mit einem Griffabschnitt und einem Übergangsabschnitt auf, wobei der Übergangsabschnitt auf einer Seite mit dem Griffabschnitt und auf der gegenüberliegenden Seite mit der Mulde verbunden ist.

In einer Ausgestaltung ist der Durchmesser des Übergangsabschnitts kleiner als der Durchmesser des Griffabschnitts. Vorzugsweise beträgt das Verhältnis des Durchmessers des Griffabschnitts zum Durchmesser des Übergangsabschnitts von 1,1 bis 10, bevorzugt von 2 bis 8. Der Durchmesser des Übergangsabschnitts beträgt vorzugsweise von 1 mm bis 5 mm, bevorzugt von 2 mm bis 4 mm. In einer Ausgestaltung weist der Querschnitt des Übergangsabschnitts eine Form auf, bei der die zur Öffnung der Mulde weisende Seite der Oberfläche des Übergangsabschnitts abgerundet oder spitz zulaufend ist. Ein gegenüber dem Griffabschnitt verringerter und möglichst kleiner Durchmesser des Übergangsabschnitts hat den Vorteil, dass die Gefahr einer Kontamination der Umgebung durch auf dem Übergangsabschnitt befindlichen Feststoff minimiert wird.

Der Griffabschnitt ist dazu vorgesehen, von der Greifhand des Roboterarms gegriffen und daran festgelegt zu werden. In einer Ausführungsform weist der Griffabschnitt eine Außenkontur auf, die ein unbeabsichtigtes Verschieben oder Verdrehen des Löffels in der Greifhand des Roboterarms verhindert oder zumindest erschwert. Eine derartige Außenkontur kann beispielsweise oval, flach, dreieckig, viereckig, fünfeckig, sechseckig, siebeneckig, achteckig oder mehreckig sein. Bevorzugt ist Außenkontur sechseckig, besonders bevorzugt in Form eines gleichseitigen Sechsecks.

In einer Ausführungsform weist der Griffabschnitt in einem zwischen seinen beiden Enden befindlichen Abschnitt mindestens eine Einkerbung und/oder mindestens eine Ausbuchtung auf. Bevorzugt befindet sich die Einkerbung und/oder Ausbuchtung in einem in Längsrichtung betrachtet mittleren Abschnitt des Griffabschnitts. Eine derartige Gestaltung hat den Vorteil, dass die Einkerbung und/oder Ausbuchtung in ein korrespondierend gestaltetes Formelement auf der Innenseite der Greifhand des Roboterarms eingreifen kann, um den Stiel des Löffels durch Formschluss und/oder Kraftschluss an der Greifhand festzulegen.

In einer Ausgestaltung weist der Griffabschnitt mindestens eine Einkerbung auf, die mit mindestens einer Ausbuchtung in der Greifhand korrespondiert. In einer weiteren Ausgestaltung weist der Griffabschnitt mindestens eine Ausbuchtung auf, die mit mindestens einer Einkerbung in der Greifhand korrespondiert. In einer weiteren Ausgestaltung weist der Griffabschnitt mindestens eine Einkerbung und mindestens eine Ausbuchtung auf, die mit mindestens einer Ausbuchtung und mindestens einer Einkerbung in der Greifhand korrespondieren. In einer Ausgestaltung weist die Einkerbung und/oder die Ausbuchtung eine Ausdehnung in radialer Richtung von 1 mm bis 5 mm, bevorzugt von 2 mm bis 4 mm auf. In axialer Richtung weist die Einkerbung und/oder die Ausbuchtung vorzugsweise eine Ausdehnung von 3 mm bis 10 mm, bevorzugt von 4 mm bis 6 mm auf.

In einer Ausführungsform weist der Griffabschnitt des Löffels eine Markierung auf, anhand derer der Roboter erkennen kann, in welcher Position sich die Mulde des Löffels in Relation zur Greifhand des Roboterarms befindet. In einer Ausgestaltung ist die Markierung als Einkerbung und/oder als Ausbuchtung im Griffabschnitt des Löffels ausgeführt, vorzugsweise als punktförmige Einkerbung und/oder Ausbuchtung. Vorzugsweise befindet sich die Markierung bei allen Löffeln, die bei dem erfindungsgemäßen Verfahren eingesetzt werden, an derselben Stelle in Relation zur Öffnung der Mulde, beispielsweise auf der Seite des Griffabschnitts, an der sich auch die Muldenöffnung befindet oder auf der gegenüberliegenden Seite des Griffabschnitts. Eine Markierung an derselben Stelle bei allen Löffeln hat den Vorteil, dass die Robotersteuerung bei Aufnahme des Löffels durch die Greifhand unmittelbar die Position der Muldenöffnung ermitteln kann.

In einer Ausführungsform ist die äußere Oberfläche des Griffabschnitt des Löffels zumindest teilweise mit einer rutschhemmenden Beschichtung versehen. In einer Ausgestaltung umfasst die rutschhemmende Beschichtung eine Gummierung, die beispielsweise als Gummischicht auf Teile der äußeren Oberfläche des Griffabschnitts des Löffels oder auf die gesamte äußere Oberfläche des Griffabschnitts des Löffels aufgebracht sein kann. Eine rutschhemmende Beschichtung hat den Vorteil einer Erhöhung der Haftreibung und besseren Griffkraftverteilung.

Die Mulde des Löffels erfüllt mehrere Funktionen: In ihr wird Feststoff aus dem Vorratsbehälter entnommen, sie sorgt für den sicheren Transport des Feststoffs vom Vorratsbehälter zum Zielbehälter und durch ihre Entleerung wird der Feststoff in den Zielbehälter transportiert.

In einer Ausführungsform weist die Mulde eine Wandung auf, die sich zu ihrem Rand hin verjüngt. Vorzugsweise ist der Rand abgerundet, spitz zulaufend und/oder scharfkantig. Dadurch wird einerseits die Auflagefläche, auf der sich potenziell Feststoffpartikel ablagern können, minimiert. Weiterhin kann eine Mulde mit einem dünnen oder scharfkantigen Rand eingesetzt werden, um verfestigten oder verklumpten Feststoff in dem Vorratsbehälter zu lockern oder Material daraus auszukratzen.

In einer Ausführungsform hat der zur Aufnahme des Feststoffs vorgesehene innere Bereich der Mulde die Form einer Halbkugel. Diese Gestaltung hat den Vorteil, dass sie einfach zu fertigen ist, und die Mulde ein in Relation zu ihren Außenmaßen möglichst großes Aufnahmevolumen für Feststoff bietet.

In einer alternativen Ausführungsform hat der zur Aufnahme des Feststoffs vorgesehene innere Bereich der Mulde die Form eines Teils eines Rotationstorus mit kreisförmigem Querschnitt. Der Teil beträgt vorzugsweise von 50° bis 70°, bevorzugt von 55° bis 65°, insbesondere 60° des Torus, wobei der gesamte Torus 360° entspricht. Diese Gestaltung hat den Vorteil, dass bei einer Drehung des Löffels zum Entleeren der Mulde aufgrund der geometrischen Gestaltung eines Torusabschnitts die aus der Mulde rieselnde Menge an Feststoff unabhängig vom aktuellen Drehwinkel des Löffels ist.

In einer Ausführungsform ist zumindest die Innenseite der Mulde mit einer Antihaftbeschichtung versehen. Das hat den Vorteil, dass eine mögliche Anhaftung von zu dosierendem Feststoff in der Mulde verhindert oder zumindest die Wahrscheinlichkeit einer Anhaftung signifikant vermindert wird.

Der Löffel kann aus verschiedenen Materialien hergestellt werden, je nach Anforderung des spezifischen Anwendungsfalls, beispielsweise aus einem Material, das eine hohe Beständigkeit gegen chemische Einflüsse und mechanische Belastungen aufweist. Der Löffel kann beispielsweise aus einem Metall wie Edelstahl oder einem Kunststoff gefertigt sein.

Der Herstellungsprozess kann verschiedene Verfahren umfassen, wie Spritzgießen für Löffel aus Kunststoff oder Präzisionsschmieden für Löffel aus Metall. Der Löffel kann auch durch ein additives Fertigungsverfahren (3D-Druck) hergestellt werden. Auf diese Weise können unterschiedlichste Formen und Konturen des Löffels realisiert werden.

In einer Ausführungsform ist der Löffel nur zur einmaligen Verwendung vorgesehen. Dies ist insbesondere dann vorteilhaft, wenn der zu handhabende Feststoff selbst nach einem Reinigungsschritt zumindest in Spuren auf dem Löffel nachweisbar ist und dadurch die Gefahr der Kreuzkontamination von Proben besteht. In einem solchen Fall ist der Löffel vorzugsweise aus einem günstigen recyclingfähigen Material hergestellt, insbesondere aus einem leicht zu recycelnden Kunststoff.

In einer Ausführungsform wird der Vorratsbehälter vor Beginn der Entnahme von Feststoff durch die Greifhand geöffnet. Vorzugsweise wird der Vorratsbehälter geöffnet, wenn er von einem Deckel verschlossen ist. In einer Ausführungsform wird der Vorratsbehälter nach Abschluss des Dosiervorgangs durch die Greifhand verschlossen. Vorzugsweise wird der Vorratsbehälter mit einem Deckel verschlossen, insbesondere mit demselben Deckel, mit dem der Vorratsbehälter vor Beginn des Dosiervorgangs verschlossen war. Die Fähigkeit des Roboters, den Vorratsbehälter zu öffnen und/oder zu schließen, erleichtert eine vollautomatische Bearbeitung der Probenvorbereitung, beispielsweise im Umfeld einer Laborautomatisierung.

In einer Ausführungsform wird der Zielbehälter vor der Positionierung auf der Waage durch die Greifhand geöffnet. Vorzugsweise wird der Zielbehälter geöffnet, wenn er von einem Deckel verschlossen ist. In einer Ausführungsform wird der Zielbehälter nach Abschluss des Dosiervorgangs durch die Greifhand verschlossen. Vorzugsweise wird der Zielbehälter mit einem Deckel verschlossen, insbesondere mit demselben Deckel, mit dem der Zielbehälter vor Beginn des Dosiervorgangs verschlossen war. Die Fähigkeit des Roboters, den Zielbehälter zu öffnen und/oder zu schließen, erleichtert eine vollautomatische Bearbeitung der Probenvorbereitung, beispielsweise im Umfeld einer Laborautomatisierung.

In einer Ausführungsform wird der Löffel im Schritt b) von der Greifhand aus einem Aufbewahrungsregal entnommen. Dies hat den Vorteil, dass ein Aufbewahrungsregal für Löffel die einfache Bereitstellung unterschiedlicher Löffel und den einfachen Zugriff des Roboters darauf während des Dosiervorgangs ermöglicht.

In einer Ausführungsform enthält das Aufbewahrungsregal Löffel mit Mulden von unterschiedlichem Fassungsvermögen, und die Auswahl des Löffels aus dem Aufbewahrungsregal erfolgt in Abhängigkeit der zu dosierenden Menge an feinteiligem Feststoff. Dies hat den Vorteil, dass für jeden Anwendungsfall die optimale Größe der Mulde des Löffels gewählt werden kann, was positive Auswirkungen auf die für die Dosierung benötigte Gesamtdauer des Dosiervorgangs und die Dosiergenauigkeit hat. Für den Einsatz der erfindungsgemäßen Vorrichtung im Bereich der Laborautomatisierung und Probenvorbereitung sind die Löffel vorzugsweise so gestaltet, dass die Füllvolumina ihrer Mulden im Bereich unterhalb eines Kubikzentimeters liegen, beispielsweise 0,01 cm³, 0,025 cm³, 0,05 cm³, 0,1 cm³, 0,25 cm³, 0,5 cm³ und 1 cm³.

In einer Ausführungsform wird vor der Entnahme des Feststoffs aus einem Vorratsbehälter der Füllstand in dem betreffenden Vorratsbehälter bestimmt. Geeignete Verfahren zur Bestimmung des Füllstands sind beispielsweise optische Methoden oder Ultraschallaufnahmen. Die Ermittlung des Füllstands vor Entnahme des Feststoffs hat den Vorteil, dass der Löffel an einer zur Entnahme geeigneten Stelle in dem Vorratsbehälter positioniert werden kann. Dadurch kann verhindert werden, dass der Löffel nur teilweise mit Feststoff befüllt wird oder zu tief in den Vorratsbehälter eingebracht wird, was Probleme bei der Steuerung des Roboters hervorrufen kann.

In einer Ausführungsform wird der Löffel im Schritt c) in dem Vorratsbehälter gedreht, um die Mulde mit feinteiligem Feststoff zu füllen. Vorzugsweise wird der Löffel um mindestens 90°, weiterhin bevorzugt um mindestens 180° gedreht. Dies hat den Vorteil, dass die Mulde zuverlässig mit Feststoff gefüllt wird.

In einer Ausgestaltung wird der Löffel durch den Roboter derart in dem Vorratsbehälter bewegt, dass die Mulde des Löffels eine kreisende Bewegung nahe der Innenwand des Vorratsbehälters ausführt. Dies hat den Vorteil, dass die Mulde zuverlässig mit Feststoff befüllt wird und gleichzeitig der Feststoff in dem Vorratsbehälter durchmischt wird, wodurch eine repräsentativere Probe des Feststoffs entnommen werden kann.

In einer Ausgestaltung wird der Löffel durch den Roboter nach Befüllung der Mulde geschüttelt. Dadurch kann Feststoff, der sich oberhalb der Ebene der Muldenöffnung befindet, abgeschüttelt werden und verbleibt im Vorratsbehälter. Die Oberfläche der gefüllten Mulde kann nivelliert werden, bevor der Löffel aus dem Vorratsbehälter gezogen wird. Dies hat den Vorteil, dass bei der Entnahme des Löffels aus dem Vorratsbehälter das Risiko sinkt, dass Feststoff während der Bewegung des Löffels ungewollt aus der Mulde fällt. Einer Gefahr der Kontamination des Arbeitsplatzes, anderer Vorratsbehälter oder anderer Zielbehälter wird dadurch vorgebeugt.

In einer Ausführungsform wird der Löffel im Schritt e) durch die Greifhand inkrementell gedreht, wobei bei einem ersten Drehwinkel um die Achse des Löffelstiels eine erste Menge an Feststoff aus der Mulde des Löffels rieselt, und bei einem zweiten Drehwinkel um die Achse des Löffelstiels eine zweite Menge an Feststoff aus der Mulde des Löffels rieselt.

In einer Ausführungsform wird der Löffel im Schritt e) zusätzlich zur Verdrehung durch die Greifhand geschüttelt. Dies hat den Vorteil, dass der in der Mulde des Löffels befindliche Feststoff gelockert wird, was eine feinere Dosierung ermöglicht.

In einer Ausführungsform werden die Schritte b) bis f) des Verfahrens so lange wiederholt, bis eine vorgegebene Zielmenge an feinteiligem Feststoff in den Zielbehälter dosiert wurde.

In einer Ausgestaltung ist die Steuerung des Roboters so eingerichtet, dass aus der Kenntnis der zu dosierenden Feststoffmenge und der Menge an Feststoff, der in der Mulde eines Löffels aufgenommen werden kann, zunächst bestimmt wird, wie viele volle Löffel auf jeden Fall dosiert werden müssen, um die Zielmenge zu erreichen. Für die entsprechende Anzahl an vollen Löffeln, die auf jeden Fall dosiert werden müssen, kann bei der Wiederholung des Verfahrens Schritt f) der Ermittlung des Gewichts des Zielbehälters auf der Waage entfallen. Dies hat den Vorteil, dass die Mindestanzahl an Wiederholungen der Verfahrensschritte schneller durchgeführt werden kann, was die für den Dosierungsvorgang erforderliche Gesamtdauer reduziert. Die Information über die in der Mulde eines Löffels aufnehmbare Menge an Feststoff kann der Steuerung beispielsweise durch eine Datenbank mit entsprechenden Daten oder durch Vorab-Test mit dem konkret zu dosierenden Feststoff zur Verfügung gestellt werden. In einer Ausgestaltung wird die Information über die in der Mulde eines Löffels aufnehmbare Menge an Feststoff dadurch zur Verfügung gestellt, dass zu Beginn der Dosierung ein voller Löffel in das Zielbehälter dosiert wird und die in den Zielbehälter dosierte Menge mittels der Waage bestimmt wird. In einer weiteren Ausgestaltung wird die Information über die in der Mulde eines Löffels aufnehmbare Menge an Feststoff dadurch zur Verfügung gestellt, dass der Vorratsbehälter auf die Waage gestellt wird, sein Gewicht vor der Entnahme von Feststoff durch den Löffel ermittelt wird, anschließend ein Löffel Feststoff aus dem Vorratsbehälter entnommen wird, danach das Gewicht des Vorratsbehälters nach der Entnahme des Feststoffs ermittelt wird, und die Differenz der beiden ermittelten Werte für das Gewicht als Füllgewicht einer Mulde des verwendeten Löffels bestimmt wird.

In einer Ausführungsform werden die Schritte a) bis f) des Verfahrens mehrfach durchgeführt, wobei mindestens einmal der zu Beginn des Verfahrens eingesetzte Löffel durch einen Löffel ersetzt wird, dessen Mulde ein geringeres Volumen zur Aufnahme von Feststoff aufweist als die Mulde des zu Beginn eingesetzten Löffels. Dies hat den Vorteil, dass gegen Ende des Dosierprozesses, wenn die zu dosierende Restmenge geringer wird, eine feinere Dosierbarkeit erreicht wird.

In einer Ausführungsform weist der Roboter einen zweiten Roboterarm auf, der vor Schritt b) den Vorratsbehälter aus der Halterung entnimmt und während der Durchführung der weiteren Schritte d) bis f) den Vorratsbehälter hält. Vorzugsweise stellt der zweite Roboterarm den Vorratsbehälter nach Abschluss der Dosierung wieder in die Halterung zurück. Dies hat den Vorteil, dass durch einen zweiten Roboterarm eine größere Flexibilität und eine kürzere Gesamtdauer des Dosierungsprozesses erreicht wird.

In einer Ausführungsform wird der Löffel nach Abschluss der Dosierung durch den Roboter in eine Reinigungseinrichtung transportiert, in der der Löffel gereinigt wird. Vorzugsweise wird der gereinigte Löffel durch den Roboter von der Reinigungseinrichtung in das Aufbewahrungsregal transportiert. In einer weiteren Ausführungsform wird das Aufbewahrungsregal samt aller darin befindlichen Löffel in einer Reinigungseinrichtung gereinigt. Eine Reinigung des Löffels hat den Vorteil, dass bei Beginn eines neuen Zyklus des Dosierprozesses saubere Löffel zur Verfügung stehen und eine Kreuzkontamination einer zu dosierenden Substanz mit einer Substanz, die in einem früheren Dosierprozess gehandhabt wurde, vermieden wird.

Die Aspekte der Erfindung weisen diverse Vorteile gegenüber im Stand der Technik bekannten Ansätzen zur Dosierung feinteiliger Feststoffe auf:
- Eine Kontamination der dosierten Feststoffe kann sicher vermieden werden.
- Die Erfindung ermöglicht die die Dosierung aus einer einzelnen oder mehreren Quellen in ein einzelnes oder mehrere Ziele unter Vermeidung von Kreuzkontaminationen
- Die Vorrichtung lässt sich leicht und gründlich reinigen.
- Der Dosiervorgang ist reproduzierbar und präzise, es werden gleichmäßige Dosierergebnisse erzielt.
- Eine Dosierung von Feststoffen ist in kleinen Mengen im Milligramm- bis Gramm-Bereich möglich.
- Das Zusammenspiel der einzelnen Komponenten der Vorrichtung gewährleistet eine robuste Handhabung der zu dosierenden Feststoffe, die auch die Handhabung abrasiver Materialien ohne Verschleiß der Komponenten erlaubt.

### Detaillierte Beschreibung

Weitere Einzelheiten und Merkmale der Erfindung ergeben sich aus der nachfolgenden Beschreibung von bevorzugten Ausführungsbeispielen, insbesondere in Verbindung mit den Unteransprüchen. Hierbei können die jeweiligen Merkmale für sich alleine oder zu mehreren in Kombination miteinander verwirklicht sein. Die Erfindung ist nicht auf die Ausführungsbeispiele beschränkt. Die Ausführungsbeispiele sind in den Zeichnungen schematisch dargestellt. Die Zeichnungen sind als Prinzipdarstellungen zu verstehen. Sie stellen keine Beschränkung der Erfindung dar, beispielsweise im Hinblick auf konkrete Abmessungen oder Ausgestaltungsvarianten, sofern sich aus der Beschreibung der Zeichnungen nichts Gegenteiliges ergibt. Gleiche Bezugsziffern in den einzelnen Zeichnungen bezeichnen dabei gleiche oder funktionsgleiche bzw. hinsichtlich ihrer Funktionen einander entsprechende Elemente.

Im Einzelnen zeigen in schematischer Darstellung:
- Fig. 1:: eine Vorrichtung zur Dosierung von feinteiligen Feststoffen gemäß einer ersten Ausführungsform der Erfindung während eines ersten Arbeitsschritts
- Fig. 2:: die Vorrichtung gemäß Fig. 1 während eines zweiten Arbeitsschritts
- Fig. 3:: eine Vorrichtung zur Dosierung von feinteiligen Feststoffen gemäß einer zweiten Ausführungsform
- Fig. 4:: eine Vorrichtung zur Dosierung von feinteiligen Feststoffen gemäß einer dritten Ausführungsform

Liste der verwendeten Bezugszeichen
- 1 ...: Roboter
- 2 ...: Roboterarm
- 3 ...: Greifhand
- 4 ...: Waage
- 5 ...: Löffel
- 6 ...: Aufbewahrungsregal für Löffel
- 7 ...: Vorratsbehälter
- 8 ...: Halterung für Vorratsbehälter
- 9 ...: Zielbehälter

### Ausführungsbeispiele

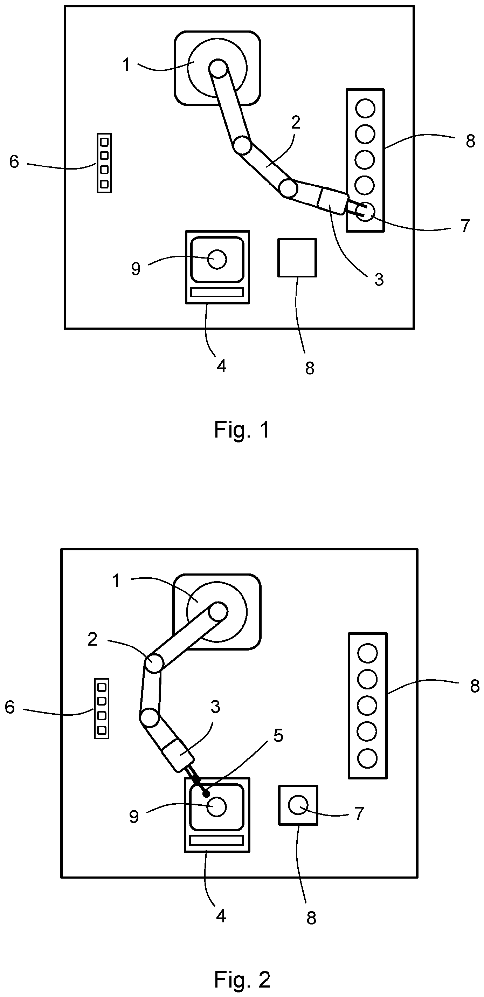

Fig. 1 und Fig. 2 zeigen schematisch eine Vorrichtung zur Dosierung von feinteiligen Feststoffen gemäß einer ersten Ausführungsform der Erfindung in der Draufsicht. Die Vorrichtung umfasst einen Roboter 1 mit einem Roboterarm 2, an dessen Ende eine Greifhand 3 angeordnet ist. Weiterhin umfasst die Vorrichtung eine Halterung 8 für Vorratsbehälter 7, eine Waage 4, ein Aufbewahrungsregal 6 für Löffel sowie eine in den Zeichnungen nicht dargestellte Steuerung zur Steuerung des Roboterarms 2. Die genannten Komponenten der Vorrichtung können auf einer Arbeitsplatte angeordnet sein, beispielsweise einem Arbeitstisch in einem Labor, in einem Laborabzug oder einer zur Dosierung vorgesehenen abgeschlossenen Kabine.

Aus Gründen der übersichtlichen Darstellung sind in Fig. 1 lediglich fünf Aufnahmeplätze für Vorratsbehälter in der Halterung 8 dargestellt. Selbstverständlich kann die Halterung auch weniger oder mehr Aufnahmeplätze aufweisen. Die Halterung 8 kann auch eine andere als rechteckige Form aufweisen, beispielsweise gebogen oder halbrund. Neben der dargestellten linearen Anordnung der Aufnahmeplätze für Vorratsbehälter 7 in der Halterung 8 sind auch andere Anordnungen möglich, beispielsweise mehrere hintereinander angeordnete Reihen oder ein anderes Muster der Anordnung von Aufnahmeplätzen. Bei einer Anordnung in zwei Raumrichtungen, beispielsweise zwei oder mehrere Reihen hintereinander ist die Halterung vorzugsweise so gestaltet, dass die Greifhand 3 des Roboters 1 jeden Aufnahmeplatz anfahren kann, ohne mit einem Vorratsbehälter in einem anderen Aufnahmeplatz zu kollidieren. Dies kann beispielsweise dadurch sichergestellt werden, dass die Aufnahmeplätze in mindestens einer Raumrichtung in der Höhe versetzt sind. So kann bei mehreren Reihen hintereinander z.B. die zweite Reihe höher angeordnet sein als die erste Reihe, und eine ggf. vorhandene dritte Reihe wiederum höher als die zweite Reihe.

Die Halterung 8 mit den mehreren Aufnahmeplätzen dient in dem dargestellten Beispiel als Lager für Vorratsbehälter 7. Zur Durchführung des Dosiervorgangs ist eine weitere Halterung 8 vorgesehen, die neben der Waage 4 angeordnet ist und Platz zur Aufnahme eines Vorratsbehälters 7 bietet. Die Waage 4 umfasst eine Fläche, auf der ein Zielbehälter 9, in den feinteiliger Feststoff aus dem Vorratsbehälter 7 dosiert werden soll, positioniert werden kann. Weiterhin kann die Waage 4 Bedienelemente, grafische Anzeigen und/oder informationstechnische Schnittstellen aufweisen.

Im Folgenden wird beispielhaft ein Verfahren zur Dosierung feinteiliger Feststoffe aus einem Vorratsbehälter in einen Zielbehälter beschrieben. Abwandlungen des Verfahrens sind selbstverständlich möglich. Auch sind die Schritte nicht zwingend in der angegebenen Reihenfolge durchzuführen, sofern sich aus der logischen Abfolge nichts anderes ergibt.

Zu Beginn des Dosierverfahrens werden mindestens ein Vorratsbehälter 7 und mindestens ein Zielbehälter 9 bereitgestellt. Die Bereitstellung von Vorratsbehälter 7 und/oder Zielbehälter 9 kann durch den Roboter 1 erfolgen. Sie kann aber auch durch ein anderes Automatisierungssystem oder eine Bedienperson erfolgen. Insbesondere im Laborumfeld kann beispielsweise vor der Durchführung des Verfahrens eine Bedienperson den Zielbehälter 9 auf die Waage 4 stellen. Die Bedienperson kann auch benötigte Vorratsbehälter 7 in die Halterung 8 stellen. Es ist auch möglich, dass die Halterung 8 außerhalb der erfindungsgemäßen Vorrichtung mit Vorratsbehältern 7 bestückt und anschließend die gesamte Halterung 8 in der Vorrichtung platziert wird. Diese Vorbereitung der Vorratsbehälter kann auch automatisiert und insbesondere parallel zur Durchführung der Dosierung erfolgen.

Es hat sich als vorteilhaft herausgestellt, wenn sich der Vorratsbehälter 7, aus dem der Feststoff entnommen werden soll, zumindest während der Dosierung in räumlicher Nähe zum Zielbehälter 9 befindet. Neben kürzeren Zykluszeiten der Bewegungen des Roboterarms 2 hat diese Anordnung den weiteren Vorteil, dass ein Kontaminationsrisiko durch aus dem Löffel fallendes Pulver minimiert wird. Im dargestellten Beispiel ist daher vorgesehen, dass der Roboterarm 2 mit seiner Greifhand 3 zunächst den ausgewählten Vorratsbehälter 7 aus der Halterung 8 zur Bevorratung entnimmt und in die Halterung 8 neben der Waage 4 positioniert. Dort verbleibt der Vorratsbehälter 7 während des Dosiervorgangs und wird nach Abschluss des Dosiervorgangs wieder in die Halterung 8 zur Bevorratung zurückgestellt. In Fig. 1 ist der Roboterarm 2 in einer Situation angedeutet, in der er den ausgewählten Vorratsbehälter 7 aus der Halterung 8 zur Bevorratung entnimmt.

Häufig sind Vorratsbehälter 7 und/oder Zielbehälter 9 verschlossen, beispielsweise mit einem schraubbaren Deckel. In einem solchen Fall wird der zur Dosierung ausgewählte Vorratsbehälter 7 und/oder der Zielbehälter 9 vor Beginn der Entnahme von Feststoff durch die Greifhand 3 des Roboters 1 geöffnet. Der Deckel kann auf einem dafür vorgesehenen Platz im Arbeitsbereich der Vorrichtung oder außerhalb abgelegt werden. Nach Abschluss des Dosiervorgangs können Vorratsbehälter 7 und/oder der Zielbehälter 9 wieder verschlossen werden, beispielsweise indem die Greifhand 3 des Roboters die zu Beginn deponierten Deckel aufgreift und auf dem jeweiligen Behälter befestigt.

Erfindungsgemäß erfolgt die Dosierung des Feststoffes mittels eines Löffels 5. In der in Fig. 1 und Fig. 2 dargestellten Ausführungsform werden mehrere unterschiedliche Löffel in einem Aufbewahrungsregal 6 bereitgestellt. Im Beispiel ist das Aufbewahrungsregal 6 auf der der Halterung 8 für die Bevorratung der Vorratsbehälter 7 gegenüberliegenden Seite auf der Arbeitsfläche angeordnet. Es kann aber grundsätzlich an jedem Platz angeordnet sein, der für den einfachen und schnellen Zugriff durch den Roboterarm 2 zweckmäßig ist. Die bei der Dosierung eingesetzten Löffel weisen einen Stiel und eine an einem Ende des Stiels angeordnete Mulde auf. In dem Aufbewahrungsregal sind die Löffel derart gelagert, dass die Greifhand 3 des Roboterarms 2 problemlos auf den Stiel der Löffel zugreifen kann.

Zu Beginn des Dosiervorgangs greift der Roboter 1 mit seiner Greifhand 3 den Stiel eines ausgewählten Löffels 5 im Aufbewahrungsregal 6 und legt den Löffel 5 damit an seinem Stiel mit der Greifhand 3 fest. Die Greifhand 3 des Roboters 1 ist entsprechend ausgebildet, den Löffel an seinem Stiel festzulegen und wieder freizugeben. Dies kann durch eine entsprechende Gestaltung der Greifhand 3 und ihre Bewegungsmöglichkeiten sichergestellt werden.

In einem nächsten Schritt führt der Roboter 1 den Löffel mit seiner Mulde in den ausgewählten Vorratsbehälter 7. Das Einführen der Mulde in den Vorratsbehälter 7 erfolgt derart, dass in dem Vorratsbehälter 7 befindlicher feinteiliger Feststoff in der Mulde des Löffels 5 aufgenommen wird. Abhängig von Faktoren wie dem Füllstand im Vorratsbehälter oder der Konsistenz und Beschaffenheit des zu entnehmenden Feststoffs kann es ausreichen, wenn die Mulde des Löffels tief genug in den Feststoff im Vorratsbehälter 7 eintaucht, um die Mulde zu füllen. Es kann aber auch nützlich oder sogar erforderlich sein, weitere Maßnahmen zu ergreifen, damit die Mulde ausreichend mit Feststoff gefüllt wird. Beispielsweise kann der Löffel 5 in dem Vorratsbehälter 7 gedreht werden, um die Mulde mit feinteiligem Feststoff zu füllen. Nach Befüllung der Mulde mit Feststoff wird der Löffel 5 aus dem Feststoff herausgezogen. Es hat sich als vorteilhaft herausgestellt, wenn der Löffel nach Aufnahme des feinteiligen Feststoffs durch die Greifhand 3 geschüttelt wird, um die Oberfläche der gefüllten Mulde zu nivellieren. Dies erfolgt vorzugsweise noch im Vorratsbehälter 7, damit der abgeschüttelte Feststoff im Behälter verbleibt.

Nach Entnahme des zu dosierenden Feststoffs positioniert der Roboterarm 2 die Greifhand 3 mit dem Löffel 5 über der Öffnung des sich auf der Waage 4 befindenden Zielbehälters 9. Fig. 2 stellt eine Situation dar, in der sich der Roboterarm 2 in Richtung des Zielbehälters 9 bewegt, die Mulde des Löffels 5 sich aber noch nicht über der Öffnung des Zielbehälters 9 befindet. Sobald sich die Mulde des Löffels 5 über der Öffnung des Zielbehälters 9 befindet, dreht die Greifhand 3 des Roboters 1 den Löffel in eine Schräglage, sodass der feinteilige Feststoff aus der Mulde des Löffels 5 in den Zielbehälter 9 rieselt.

Um die Menge des in den Zielbehälter 9 rieselnden Feststoffs zu beeinflussen, können verschiedene Maßnahmen ergriffen werden. Wenn der gesamte Inhalt der Mulde in den Zielbehälter 9 dosiert werden soll, kann der Löffel 5 so weit gedreht werden, dass der gesamte Inhalt aus der Mulde rieselt. Wenn jedoch nur ein Teil der in der Mulde vorhandenen Menge an Feststoff in den Zielbehälter 9 dosiert werden soll, kann der Löffel 5 langsam kontinuierlich oder in Stufen gedreht werden. Beispielsweise kann der Löffel durch die Greifhand inkrementell gedreht werden, wobei bei einem ersten Drehwinkel um die Achse des Löffelstiels eine erste Menge an Feststoff aus der Mulde des Löffels rieselt, und bei einem zweiten Drehwinkel um die Achse des Löffelstiels eine zweite Menge an Feststoff aus der Mulde des Löffels rieselt. Es ist auch möglich, den Löffel zusätzlich zur Verdrehung durch die Greifhand 3 zu schütteln, wobei das Ausmaß der Schüttelbewegung Einfluss auf die durch das Schütteln aus der Mulde entfernte Menge an Feststoff hat.

Die Waage 4 ermittelt während des Dosiervorgangs kontinuierlich oder in Intervallen das Gewicht des auf ihr befindlichen Zielbehälters 9 inklusive des sich darin befindlichen dosierten Feststoffs. In dem dargestellten Beispiel wurde zu Beginn des Dosiervorgangs eine zu dosierende Menge an Feststoff vorgegeben. Die Steuerung des Roboters 1 vergleicht die durch die Waage 4 ermittelte dosierte Menge an Feststoff mit der vorgegebenen Zielmenge. Die Steuerung veranlasst den Roboter 1, die vorgenannten Schritte der Entnahme des Feststoffs aus dem Vorratsbehälter 7 und die Dosierung des entnommenen Feststoffs in den Zielbehälter 9 so lange wiederholt durchzuführen, bis die vorgegebene Zielmenge an feinteiligem Feststoff in den Zielbehälter 9 dosiert wurde.

Die Steuerung des Roboters 1 kann so eingerichtet sein, dass aus der Kenntnis der zu dosierenden Feststoffmenge und der Menge an Feststoff, der in der Mulde eines Löffels 1 aufgenommen werden kann, zunächst bestimmt wird, wie viele volle Löffel 1 auf jeden Fall dosiert werden müssen, um die Zielmenge zu erreichen. Ergibt sich beispielsweise durch diese Vorab-Berechnung, dass eine Anzahl N an vollen Löffeln dosiert werden muss, so kann der Vorgang der Befüllung des Zielbehälters auch N-1 mal durchgeführt werden, ohne das Zielgewicht ständig zu kontrollieren. Erst bei der Dosierung im N-ten Durchlauf ist dann eine Kontrolle durch die Waage 4 erforderlich. Die Information über die in der Mulde eines Löffels aufnehmbare Menge an Feststoff hängt von den Eigenschaften des jeweiligen Feststoffs ab, insbesondere von seiner Dichte. Diese Information kann der Steuerung beispielsweise durch eine Datenbank, in der entsprechende Feststoffeigenschaften hinterlegt sind, zur Verfügung gestellt werden. Die Information kann aber auch dadurch bereitgestellt werden, dass vor Beginn des Dosiervorgangs die Masse an Feststoff, die in einer gefüllten Mulde eines Löffels 1 aufnehmbar ist, mit Hilfe der Waage 4 bestimmt wird.

In einer vorteilhaften Variante des Dosierverfahrens kommen im Verlauf der Dosierung mehrere unterschiedliche Löffel zum Einsatz. In dieser Variante enthält das Aufbewahrungsregal 6 Löffel 5 mit Mulden von unterschiedlichem Fassungsvermögen. Abhängig von der Menge und gegebenenfalls Art des zu dosierenden Feststoffs wählt die Steuerung des Roboters 1 zu Beginn des Dosierverfahrens einen geeigneten Löffel 5 für den ersten Dosierschritt aus. Sobald die in den Zielbehälter 9 dosierte Menge einen vorbestimmten Grenzwert erreicht hat, führt der Roboterarm 2 den bislang verwendeten Löffel 5 in das Aufbewahrungsregal 6 zurück, legt ihn dort ab und entnimmt dem Aufbewahrungsregal 6 einen anderen Löffel 5, dessen Mulde ein geringeres Volumen zur Aufnahme von Feststoff aufweist als die Mulde des zu Beginn eingesetzten Löffels. Mit diesem Löffel 5 wird der Dosiervorgang in der bereits beschriebenen Weise fortgesetzt. Bei dieser Variante wird die jeweils aus dem Löffel in den Zielbehälter 9 zu dosierende Menge nicht nur durch die Bewegung, beispielsweise Drehung, des Löffels beeinflusst, sondern auch durch die maximal in der jeweiligen Mulde aufnehmbaren Menge. Trotz des Zeitverlusts durch den Löffelwechsel lässt sich je nach Anwendungsfall auf diese Weise die Gesamtdauer des Dosiervorgangs reduzieren und/oder die Dosiergenauigkeit steigern.

Wenn ein Löffel 5 nicht mehr benötigt wird, beispielsweise nach einem Löffelwechsel oder am Ende des Dosiervorgangs, kann der Löffel 5 durch den Roboterarm 2 in eine Reinigungseinrichtung transportiert werden, in der der Löffel 5 gereinigt wird. Nach vollzogener Reinigung kann der gereinigte Löffel durch den Roboterarm 2 von der Reinigungseinrichtung in das Aufbewahrungsregal 6 transportiert werden.

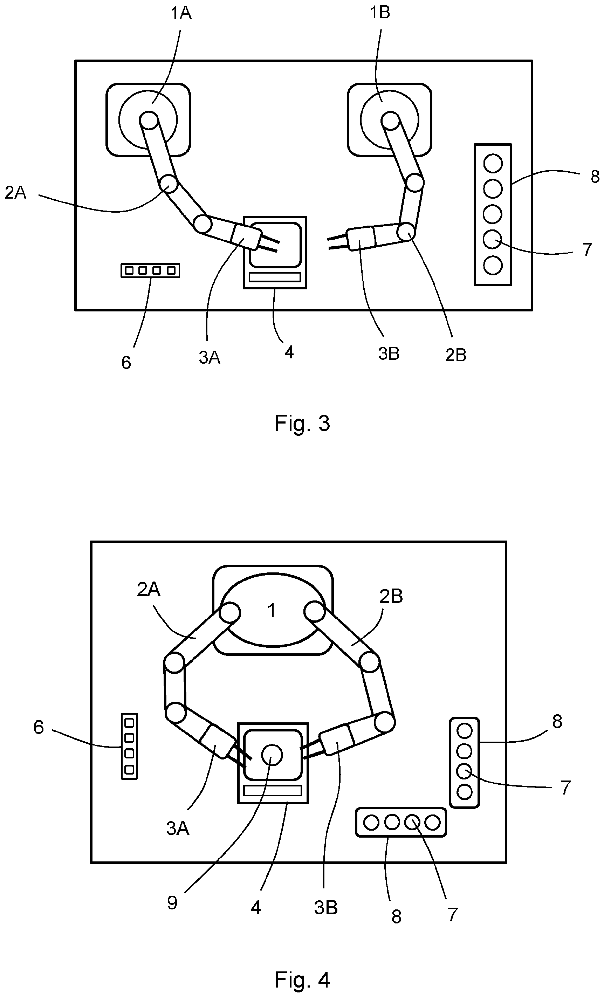

Fig. 3 zeigt schematisch eine Vorrichtung zur Dosierung von feinteiligen Feststoffen gemäß einer zweiten Ausführungsform der Erfindung in der Draufsicht. Die Komponenten der Vorrichtung sowie ihre Anordnung entsprechen im Wesentlichen den in Bezug auf die erste Ausführungsform oben beschriebenen. In der in Fig. 3 dargestellten zweiten Ausführungsform weist der Roboter 1 jedoch zwei Roboterarme 2 auf. In dem dargestellten Beispiel umfasst der Roboter zwei Teilsysteme, einen ersten Roboter 1A mit einem ersten Roboterarm 2A und einer ersten Greifhand 3A, sowie einen zweiten Roboter 1B mit einem zweiten Roboterarm 2B und einer zweiten Greifhand 3B.

In dieser Ausführungsform mit zwei Roboterarmen werden die vom Roboter durchzuführenden Arbeitsschritte auf die beiden Roboter aufgeteilt. Die Handhabung des Löffels 5 übernimmt der erste Roboter 1A, sodass die diesbezügliche Beschreibung des obigen Beispiels der ersten Ausführungsform mit einem Roboterarm übertragbar ist. Der zweite Roboter 1B übernimmt die Handhabung des ausgewählten Vorratsbehälters 7, aus dem dosiert werden soll. Der zweite Roboterarm 2B entnimmt den ausgewählten Vorratsbehälter 7 aus der Halterung 8 zur Bevorratung von Vorratsbehältern und führt ihn in die Nähe der Waage 4. Dort hält der zweite Roboterarm 2B den Vorratsbehälter während der Dauer des Dosiervorgangs. Nach Abschluss des Dosiervorgangs stellt der zweite Roboterarm 2B den Vorratsbehälter 7 wieder in die Halterung 8 zurück. Da der ausgewählte Vorratsbehälter 7 von dem zweiten Roboterarm 2B gehalten wird, entfällt die Notwendigkeit einer separaten Halterung für den Vorratsbehälter in der Nähe der Waage 4, wie dies im ersten Ausführungsbeispiel gemäß Fig. 1 und Fig. 2 erforderlich war.

Fig. 4 zeigt schematisch eine Vorrichtung zur Dosierung von feinteiligen Feststoffen gemäß einer dritten Ausführungsform der Erfindung in der Draufsicht. Wie bei der in Fig. 3 dargestellten zweiten Ausführungsform weist der Roboter 1 ebenfalls zwei Roboterarme 2 auf. Im Unterschied zur zweiten Ausführungsform handelt es sich bei dem Roboter 1 der dritten Ausführungsform um einen Zweiarmroboter, bei dem beide Roboterarme 2 am selben Roboter 1 angeordnet sind und von ihm gesteuert werden. Hinsichtlich der durchzuführenden Arbeitsschritte übernehmen der erste Roboterarm 2A und der zweite Roboterarm 2B dieselben Funktionen wie bei der oben beschriebenen zweiten Ausführungsform.

Zur Verdeutlichung der vielfältigen Gestaltungsmöglichkeiten sind die Halterungen 8 zur Bevorratung der Vorratsbehälter 7 sowie das Aufbewahrungsregal 6 für die Löffel in den in Fig. 3 und Fig. 4 dargestellten Ausführungsformen auf andere Weise im Arbeitsbereich des Robotersystems angeordnet als in der ersten Ausführungsform. Bei der dritten Ausführungsform umfasst die Haltevorrichtung 8 beispielsweise zwei Teilbereiche, die im dargestellten Beispiel in einem Winkel von etwa 90° zueinander angeordnet sind und jeweils vier Aufnahmeplätze für Vorratsbehälter 7 umfassen.

### Beispiel

In einem Labor wurde ein Versuchsstand zur Erprobung der erfindungsgemäßen Vorrichtung mit einem Zweiarmroboter aufgebaut. Das Layout des Versuchsstands entsprach im Wesentlichen der in Fig. 4 dargestellten Konfiguration.

Als Roboter wurde ein Zweiarmroboter vom Typ YuMi IRB 14000 der Firma ABB eingesetzt. Der Roboter hatte zwei identisch ausgestaltete Roboterarme, die jeweils über sieben Achsen verfügen, was eine hohe Bewegungsfreiheit und Flexibilität ermöglicht. An jedem Roboterarm befand sich eine Greifhand, die auf die Anforderungen des Dosiervorgangs angepasst war. Die erste Greifhand am ersten Roboterarm umfasste Greifbacken mit einer konturierten Innenfläche, die an die Kontur des Stiels der Löffel angepasst war. Die zweite Greifhand am zweiten Roboterarm umfasste Greifbacken mit einer konturierten Innenfläche, die an die Kontur der zu transportierenden Behälter angepasst war.

Als Waage wurde eine Präzisionswaage vom Typ WZA224-N des Herstellers Sartorius eingesetzt, die mit einer Genauigkeit von 1 mg auch für die Einwaage kleiner Mengen an Feststoff geeignet ist. Die Waage war über eine Schnittstelle mit der Robotersteuerung verbunden. Die Waage war wie in Fig. 4 dargestellt vor dem Roboter auf einem Arbeitstisch fixiert, um sie gegen ein Verrutschen zu sichern. Auf der Seite des ersten Roboterarms war auf dem Arbeitstisch ein Aufbewahrungsregal für Löffel angebracht, in dem drei Löffel mit unterschiedlich großen Mulden gelagert waren. Auf der Seite des zweiten Roboterarms war auf dem Arbeitstisch eine Halterung zur Bevorratung von Vorratsbehältern und Zielbehältern angebracht, die vier Aufnahmeplätze für Behälter umfasste.

Es wurde eine Vielzahl von Versuchen durchgeführt, von denen einer prototypisch im Folgenden näher beschrieben wird:
i) Zunächst wurden über ein Bedieninterface, das mit der Robotersteuerung verbunden war, für die Dosierungsaufgabe relevante Parameter eingegeben wie die Art des zu dosierenden Feststoffs, ein Identifikationsmerkmal für den Vorratsbehälter, ein Identifikationsmerkmal für den Zielbehälter, das Zielgewicht des zu dosierenden Feststoffs und Toleranzintervall für die Einwaage.
ii) Nach dem Start des Dosiervorgangs bewegte sich der zweite Roboterarm zu der Halterung, entnahm mit seiner Greifhand den vorgegebenen Zielbehälter aus der Halterung, führte den Zielbehälter zur Waage und stellte den Zielbehälter auf die Waage.
iii) Anschließend wurde die Waage durch die Robotersteuerung tariert.
iv) Der zweite Roboterarm bewegte sich wieder zur Halterung, entnahm mit seiner Greifhand den vorgegebene Vorratsbehälter aus der Halterung, schüttelte ihn, um ggf. verklumptes Pulver zu lockern, und führte ihn in die Nähe der Waage, sodass die Öffnung des Zielbehälters und die Öffnung des Vorratsbehälters nur wenige Millimeter voneinander entfernt waren. Die beiden Behälter berührten sich nicht, und der Vorratsbehälter war derart geneigt, dass der Winkel zwischen den Längsachsen der beiden Behälter ca. 80° betrug.
v) Während der Bewegung des Vorratsbehälters durch den zweiten Roboterarm bewegte sich der erste Roboterarm zum Aufbewahrungsregal und entnahm einen Löffel aus dem Aufbewahrungsregal. Vorab wurde von der Robotersteuerung auf Basis der vorgegebenen Zielmenge und der Art des zu dosierenden Feststoffs ermittelt, welcher der zur Verfügung stehenden Löffel durch den ersten Roboterarm auszuwählen ist. Nach der Entnahme des Löffels und seiner Festlegung an der Greifhand des ersten Roboterarms wurde der Roboterarm so bewegt, dass sich die Mulde des Löffels vor der Öffnung des Vorratsbehälters befand und durch eine lineare Bewegung in den Vorratsbehälter eingeführt werden konnte.
vi) Anschließend wurde der Löffel durch eine Bewegung des ersten Roboterarms in den im Vorratsbehälter befindlichen Feststoff eingetaucht, wodurch sich seine Mulde füllte. Nach der Aufnahme des Feststoffs in der Mulde wurde der Löffel durch den Roboterarm geschüttelt, um die Oberfläche des Feststoffs in der Mulde zu nivellieren und überschüssigen Feststoff abzuschütteln.
vii) Im nächsten Schritt wurde der Löffel durch eine Bewegung des ersten Roboterarms aus dem Vorratsbehälter gezogen und mit seiner Mulde über der Öffnung des Zielbehälters positioniert. Dann wurde der Löffel durch die Greifhand des ersten Roboterarms um die Längsachse des Löffels gedreht, sodass der in der Mulde befindliche Feststoff aus der Mulde in die Öffnung des Zielbehälters zu rieseln begann.
viii) Die Waage registrierte das Gewicht des in dem Zielbehälter vorhandenen Feststoffs und übermittelte die Daten an die Robotersteuerung. Sofern die Zielmenge noch nicht erreicht war, wurde der Löffel durch den ersten Roboterarm weitergedreht, bis die Mulde vollständig entleert war.
ix) Die Robotersteuerung verglich die eingewogene Menge an Feststoff mit der Zielmenge und veranlasste den Roboter, die Schritte (vi) bis (viii) so lange wiederholt auszuführen, bis das Zielgewicht unter Berücksichtigung des Toleranzintervalls erreicht war.
x) Sobald das Zielgewicht erreicht war, wurde der Löffel mit seiner Mulde wieder in den Vorratsbehälter bewegt und die Mulde durch Drehen des Löffels geleert. Anschließend wurden der Löffel und der Vorratsbehälter durch die jeweiligen Roboterarme wieder in das Aufbewahrungsregal bzw. die Halterung zurückgestellt.
xi) Das Ergebnis des Dosiervorgangs wurde an dem Bedieninterface angezeigt und in einer Datenbank abgespeichert.

In den Versuchen wurden Feststoffe unterschiedlicher Dichte, Partikelgröße und Rieselfähigkeit getestet wie feinkörniger Quarzsand, Maismehl, Backpulver und Zucker. Die Zielmenge variierte von zehn Milligramm bis ein Gramm. Das Toleranzintervall wurde auf 95% bis 105% der zu dosierenden Zielmenge festgelegt. Die Versuche verliefen erfolgreich, die Dosierung der jeweils gewünschten Zielmenge erfolgte zuverlässig innerhalb des Toleranzintervalls mit geringer Varianz.

## Patentansprüche

1. Vorrichtung zur Dosierung feinteiliger Feststoffe aus einem Vorratsbehälter (7) in einen Zielbehälter (9) umfassend eine Halterung (8) für den Vorratsbehälter (7), eine Waage (4), auf der der Zielbehälter (9) positioniert werden kann, einen Roboter (1) mit mindestens einem Roboterarm (2) mit einer Greifhand (3), und eine Steuerung zur Steuerung des Roboterarms (2), **dadurch gekennzeichnet, dass** die Greifhand (3) des Roboters (1) ausgebildet ist, einen Löffel (5), der einen Stiel und eine an einem Ende des Stiels angeordnete Mulde aufweist, an dem Stiel festzulegen und wieder freizugeben, und die Steuerung eingerichtet ist, die Mulde des Löffels (5) in den Vorratsbehälter (7) zu führen, um feinteiligen Feststoff aus dem Vorratsbehälter (7) in der Mulde aufzunehmen, den mit feinteiligem Feststoff gefüllten Löffel (5) über eine Öffnung des Zielbehälters (9) zu positionieren, und den Löffel (5) in der Greifhand (3) des Roboters (1) in eine Schräglage zu drehen, sodass der feinteilige Feststoff aus der Mulde des Löffels (5) in den Zielbehälter (9) rieselt.

2. Vorrichtung nach Anspruch 1, **dadurch gekennzeichnet, dass** der Roboter einen zweiten Roboterarm (2B) mit einer zweiten Greifhand (3B) aufweist, die ausgebildet ist, den Vorratsbehälter (7) während der Dosierung zu halten.

3. Vorrichtung nach Anspruch 1 oder 2, **dadurch gekennzeichnet, dass** die Greifhand (3) mindestens eine Greifbacke umfasst, die auf ihrer Innenseite eine Kontur aufweist, die oval, flach, dreieckig, viereckig, fünfeckig, sechseckig, siebeneckig, achteckig oder mehreckig ist.

4. Vorrichtung nach einem der vorhergehenden Ansprüche, **dadurch gekennzeichnet, dass** die Greifhand (3) auf ihrer Innenseite mindestens eine Einkerbung und/oder mindestens eine Ausbuchtung aufweist.

5. Löffel (5) für eine Vorrichtung gemäß einem der Ansprüche 1 bis 4, wobei der Löffel (5) eine Mulde und einen Stiel mit einem Griffabschnitt und einem Übergangsabschnitt mit kleinerem Durchmesser als der Griffabschnitt aufweist, wobei der Übergangsabschnitt auf einer Seite mit dem Griffabschnitt und auf der gegenüberliegenden Seite mit der Mulde verbunden ist, **dadurch gekennzeichnet, dass** der Griffabschnitt in einem zwischen seinen beiden Enden befindlichen Abschnitt mindestens eine Einkerbung und/oder mindestens eine Ausbuchtung aufweist.

6. Löffel nach Anspruch 5, **dadurch gekennzeichnet, dass** die Mulde eine Wandung aufweist, die sich zu ihrem Rand hin verjüngt.

7. Verfahren zur Dosierung feinteiliger Feststoffe aus einem Vorratsbehälter (7) in einen Zielbehälter (9) in einer Vorrichtung, die eine Halterung (8) für den Vorratsbehälter (7), eine Waage (4), auf der der Zielbehälter (9) positioniert werden kann, einen Roboter (1) mit mindestens einem Roboterarm (2) mit einer Greifhand (3) und eine Steuerung zur Steuerung des Roboterarms (2) umfasst, wobei die Steuerung den Roboter (1) veranlasst, die folgenden Schritte durchzuführen:
a) Festlegen eines Löffels (5), der einen Stiel und eine an einem Ende des Stiels angeordnete Mulde aufweist, an seinem Stiel durch die Greifhand (3) des Roboters (1),
b) Einführen der Mulde des Löffels (5) in den Vorratsbehälter (7),
c) Aufnahme von feinteiligem Feststoff aus dem Vorratsbehälter (7) in die Mulde des Löffels (5),
d) Positionierung des mit feinteiligem Feststoff gefüllten Löffel (5) über eine Öffnung des auf der Waage (4) positionierten Zielbehälters (9),
e) Drehen des Löffels (5) in der Greifhand (3) des Roboters (1) in eine Schräglage, sodass der feinteilige Feststoff aus der Mulde des Löffels (5) in den Zielbehälter (7) rieselt,
f) Ermittlung des Gewichts des zumindest teilweise befüllten Zielbehälters (9) auf der Waage.

8. Verfahren nach Anspruch 7, **dadurch gekennzeichnet, dass** vor der Entnahme des Feststoffs aus einem Vorratsbehälter (7) der Füllstand in dem betreffenden Vorratsbehälter (7) bestimmt wird.

9. Verfahren nach Anspruch 7 oder 8, **dadurch gekennzeichnet, dass** der Löffel (5) im Schritt c) in dem Vorratsbehälter (7) gedreht wird, um die Mulde mit feinteiligem Feststoff zu füllen.

10. Verfahren nach einem der vorhergehenden Ansprüche, **dadurch gekennzeichnet, dass** der Löffel (5) im Schritt e) durch die Greifhand (3) inkrementell gedreht wird, wobei bei einem ersten Drehwinkel um die Achse des Löffelstiels eine erste Menge an Feststoff aus der Mulde des Löffels (5) rieselt, und bei einem zweiten Drehwinkel um die Achse des Löffelstiels eine zweite Menge an Feststoff aus der Mulde des Löffels (5) rieselt.

11. Verfahren nach einem der vorhergehenden Ansprüche, **dadurch gekennzeichnet, dass** der Löffel (5) im Schritt e) zusätzlich zur Verdrehung durch die Greifhand (3) geschüttelt wird.

12. Verfahren nach einem der vorhergehenden Ansprüche, **dadurch gekennzeichnet, dass** die Schritte b) bis f) des Verfahrens so lange wiederholt werden, bis eine vorgegebene Zielmenge an feinteiligem Feststoff in den Zielbehälter (7) dosiert wurde.

13. Verfahren nach einem der vorhergehenden Ansprüche, **dadurch gekennzeichnet, dass** die Schritte a) bis f) des Verfahrens mehrfach durchgeführt werden, wobei mindestens einmal der zu Beginn des Verfahrens eingesetzte Löffel (5) durch einen Löffel (5) ersetzt wird, dessen Mulde ein geringeres Volumen zur Aufnahme von Feststoff aufweist als die Mulde des zu Beginn eingesetzten Löffels (5).

14. Verfahren nach einem der vorhergehenden Ansprüche, **dadurch gekennzeichnet, dass** der Roboter einen zweiten Roboterarm (2B) aufweist, der vor Schritt b) den Vorratsbehälter (7) aus der Halterung entnimmt und während der Durchführung der weiteren Schritte d) bis f) den Vorratsbehälter (7) hält.

15. Computerprogramm mit Programmcode, der bei Ausführung des Computerprogramms auf einer geeigneten Computeranlage ein Verfahren nach einem der Ansprüche 7 bis 14 durchführt.
